# EUROPEAN PATENT SPECIFICATION

(11) **EP 3 408 642 B1**
(45) Date of publication and mention of the grant of the patent: **04.11.2020**
(21) Application number: 16888475.7
(22) Date of filing: 29.01.2016
(51) Int. Cl.: G01N 1/22

(54) **DEVICE FOR USE WITH MEASURING SOIL GAS AND METHOD OF USE**
VORRICHTUNG ZUR VERWENDUNG BEIM MESSEN VON BODENLUFT UND VERFAHREN ZUR VERWENDUNG
DISPOSITIF DE MESURE DE GAZ DU SOL ET PROCÉDÉ D'UTILISATION

(43) Date of publication of application: 05.12.2018
(73) Proprietor: Vapor Pin Enterprises, Inc., Plain City, OH 43064 (US)
(72) Inventor: COX, Craig A., Columbus, Ohio 43214 (US)
(74) Representative: Capitán García, Maria Nuria
(86) International application number: PCT/US2016/015656
(87) International publication number: WO 2017/131746

(56) References cited:
- US-A- 4 261 203
- US-A- 5 786 527
- US-A- 5 922 950
- US-A1- 2008 028 826
- US-A1- 2012 282 019
- US-A1- 2012 282 019
- US-B1- 6 230 820
- SHENGTIAN GROUP ADVANTAGES AND DISADVANTAGES OF THREADED FITTINGS, [Online] 15 July 2015, XP055402197 Retrieved from the Internet: <URL:http://www.stpipefitting.cn/company/ne ws/198.html> [retrieved on 2016-03-15]

## Description

### ORIGIN

Exemplary embodiments are directed to mechanical devices and systems. More particularly, exemplary embodiments are directed to a device and system for facilitating the analysis of samples of sub-slab soil gas.

### BACKGROUND

The potential for volatile organic compounds (VOCs) associated with contaminated soil and groundwater to enter homes and businesses through basements and building slabs is a recent focus of federal and state environmental protections agencies. This potential route of exposure is commonly referred to as the "vapor intrusion pathway." Evaluations of the potential risk associated with long-term exposure to VOCs have been published by the United States Environmental Protection Agency (EPA) and other entities. These evaluations indicate that very low concentrations of some of these VOCs, on the order of a few parts per billion in some cases, can pose an unacceptable risk to building occupants. In some situations, sub-slab soil gas samples are collected to evaluate vapor concentrations and the potential for these vapors to enter a building.

The science of analyzing samples of sub-slab soil gas is known. However, the practicalities of collecting these samples of gas are quite cumbersome. Techniques and devices currently used and proposed in recent draft guidance documents by the EPA and other agencies to collect sub-slab soil gas samples are built upon the experience of environmental professionals gained over many years of sampling groundwater via monitor wells. In essence, the current state of the art for sub-slab sampling is the use of a miniature well installed through the slab. These wells, or "sub-slab vapor points" are typically installed by boring a fairly crude hole through the slab and cementing a metal tube in place. At the top of the tube are a number of threaded fittings that allow the vapor point to be connected via plastic tubing to an evacuated vessel, known in the art as a summa canister.

Because the levels of concern for many of the VOCs are so low, leaks in the vapor point fittings or along the edge of the vapor point itself allow indoor air to dilute the sample, rendering the sample useless. This situation is exacerbated by the fact that most vapor points must be sampled on multiple occasions. Each time the vapor point is used it must be disconnected and reconnected using multiple wrenches, usually in tight quarters. This activity can cause some fittings to progressively loosen and leak more readily, or result in the point itself losing its bond with the cement used to anchor it during installation. Federal and state EPA officials recognize this shortcoming and have developed elaborate, time consuming methods for detecting such leaks.

The collection of sub-slab samples can also be inconvenient to building occupants since it requires the removal of floor coverings and coring or drilling of the foundation slab. One recommended method is using an electric hammer drill or rotary hammer to produce an inner pilot hole into the concrete slab. After the pilot hole is drilled, an individual must drill an outer hole to a predetermined depth using a larger drill bit. After the outer hole is finished, the individual must use the original tool to assure that the pilot hole is then drilled through the slab and several inches into the sub-slab material. Once the drilling is completed, a stainless steel probe is assembled and inserted into the pre-drilled hole. The probe is mounted as flush as possible with the surrounding slab to minimize the interference with pedestrian or vehicular traffic. The probe has to be cemented into place to ensure that the probe assembly is air-tight with the foundation slab. Since the cement has to cure, an individual must come back at least one further time before sampling of the sub-soil may occur, further inconveniencing a homeowner or business.

Attempts have been made to overcome these and other difficulties inherent in the task of collecting sub-slab soil gas samples for analysis. Various devices and systems have been developed for use in such collection, for instance those previously described in U.S. Patent No. 8,220,347 and U.S. Patent Application No. 13/551,213, both co-owned by the applicant. Those references disclose invented devices, systems and their methods of use that facilitate the collection of sub-slab soil gas samples by, in part, eliminating the intrusion of the collection system on the interior building space, reducing the potential for damage to the slab introduced by previously used methods of collection, reducing or eliminating the risk of leakage during sampling thereby increasing testing efficacy/efficiency, and reducing collection costs through the introduction of reusable system components, for instance.

It is also known US 2012/282019 A1 that discloses a soil gas collecting device wherein the first and second barbed end portions integrally form an adaptor body, which further comprises a threaded collar disposed at a first end of the second barbed end portion that facilitates the installation and removal of the device, an internal cavity axially extending the length of both the first body portion and the second body portion that allows soil gas to flow through the first body portion and the second body portion. Such device does not allow that different types of adaptors, replacing the first barbed end portion, can be connected after installation of the device.

It is also known US 5922950 A that discloses an adaptor body comprising two portions, but does not disclose that the lower portion includes a threaded collar.

It is also known US 2008/028826 A1 that discloses an adaptor body comprising two portions, the two portions are removably detached to each other. However, does not disclose that the threaded neck includes at least one thread having oppositely disposed flat surfaces that facilitates prevention of rotation of the lower portion after installation; the threaded neck is not even accessible after installation of the adaptor body.

However, it has been found that certain disadvantages and drawbacks remain in the current state-of-the-art devices and systems. For example, variations in slab, bedding and foundation thicknesses, and in geographic structures of various testing locations have resulted in a need for sub-slab soil gas collection at variable depths relative to the top surface of a particular slab. Furthermore, as the art of sub-slab soil gas analysis continues to advance, soil gas collection may be needed at an increasing variety of depths relative to the top surface of a given slab. In some instances, drilling well into the backfill or native material beneath a slab to a desired depth for collection is found to increase the potential for clogging or the introduction of undesirable particulates into the vapor stream entering the sampling device.

In some cases, it may be desirable to introduce an external sampling device or probe into a space beneath a slab. Currently known sampling systems, however, either are not compatible with such sampling devices or require invasive installation techniques that are cumbersome, undesirable, and often cause unwanted damage to the slab or structure.

What is desired are devices and systems that eliminate some or all of the drawbacks of the known devices and techniques for measuring sub-slab soil gas. Providing a leak-resistant device that allows for prompt installation and removal, saving time and money may eliminate some or all of these drawbacks. Also, a device and system that allows for installation to occur in one appointment is desirable. Such a device may also be designed for use with different VOC measuring devices, both above- and below-slab, and with other sampling devices generally. There is also need for a system that provides some or all of these advantages in addition to the ability to collect samples at a point beneath the slab, and without clogging or contamination of the device and sample, respectively. No known references, taken alone or in combination, are seen as teaching or suggesting the presently claimed apparatus for use in the sampling of sub-slab soil gas.

### SUMMARY

Exemplary embodiments of the device may eliminate some or all of the aforementioned drawbacks of the current art. Exemplary embodiments of the system components may be machined from a single piece material, such as brass or stainless steel, eliminating the need for multiple fittings and thereby reducing the number of potential leaks. Exemplary embodiments of the system may be installed into a one-inch diameter hole cored through the slab of concrete or other foundation material. The cored hole provides a smoother bonding surface and can be accomplished using a standard, hand-held coring machine. Exemplary embodiments of the system are driven into the cored hole using a hammer or similar device according to claim 8. Installation of exemplary embodiments of the system forces flexible silicone, for example, tubing located on at least a portion of the exterior surface of an adaptor body against the interior wall of the cored hole, effectuating an air-tight, or almost air-tight, seal between the cored slab and the device. Exemplary embodiments of the adaptor body of the system may then be connected to a portion of sampling tubing via an air-tight barbed fitting.

Exemplary embodiments of the system include an adaptor body having a length and proximal and distal ends. The invention provides an adaptor body according to claim 1.

One object of the invention is to provide a system that can be used to collect sub-slab soil gas at varying depths with respect to the top surface of a given slab, without necessitating the manufacture of adaptor body components having many different lengths. Another object of the invention is to provide a system that can be used to collect sub-slab soil gas at points beneath the give slab without introducing particulates into the vapor stream being collected, and without increasing the potential for clogging occurring in the cavities of the system. Exemplary embodiments of such a system may include an extension having a length a first and second ends. The extension has an internal cavity extending longitudinally through the extension from the first end of the extension to an outlet at the second end of the extension, and an external thread disposed at the first end of the extension adapted for complimentary threaded retention within the coupling portion of the adaptor body.

In some optional embodiments, the extension is a fitting extension having a fitting portion disposed at the outlet. The fitting extension may be, for instance a barbed portion disposed at the outlet, wherein one or more generally frustum shaped barbs are disposed thereon whereby other downhole sampling devices may be attached to the system directly or indirectly, for instance via stainless steel or rigid or flexible plastic tubing. Some optional exemplary embodiments include an external engaging portion disposed between the external thread and the barbed portion of the fitting extension. The external engaging portion may have a lateral cross-sectional shape adapted for use with a tool such as a wrench to tighten or loosen the connection between the extension and the adaptor body.

In some optional exemplary embodiments of the system, the extension is a filter extension having a filter element disposed at the outlet. The filter element may, for instance, include a filter element having an attachment aperture and at least one internal rib disposed within the attachment aperture, and a barbed portion having at least one barb disposed at the outlet, wherein the barbed portion is retained within the attachment aperture of the filter element by complimentary engagement between the at least one internal rib and the at least one barb. In some optional embodiments, the filter element is formed of a sintered porous metal. Optional exemplary embodiments of the system may include a filter extension having an external engaging portion disposed between the external thread and the barbed portion of the filter extension. The external engaging portion may, for instance, have a lateral cross-sectional shape adapted for use with a tool such as a wrench to tighten or loosen the connection between the filter extension and the adaptor body.

Further optional exemplary embodiments of the system may be provided wherein the extension is a sieve extension having a plurality of lateral outlets wherein each lateral outlet intersects with the internal cavity of the sieve extension. In some optional embodiments, the sieve extension may include an external engaging portion disposed at its second end. The external engaging portion may, for instance, have a lateral cross-sectional shape adapted for use with a tool such as a wrench to tighten or loosen the connection between the sieve extension and the adaptor body. In some optional embodiments, the external engaging portion has a length and a circular cross-sectional shape with two opposing parallel sides. One object of the system is to provide lateral gas passageways by way of a plurality of lateral outlets. In some optional embodiments, the plurality of lateral outlets has at least one pair of outlet cavities extending laterally through the engaging portion in an intersecting "X" pattern. In optional embodiments, the lateral outlets are provided as three pair of outlet cavities extending laterally through the engaging portion, wherein each pair is configured in an intersecting "X" pattern.

Another object of the present invention is to provide a system for sampling sub-slab soil gas wherein the outlet or outlet(s) may be positioned at variable depths and even beneath a slab. A further object is to provide such ability without requiring the manufacture of a wide variety of adaptor bodies having differing lengths. In some optional embodiments, the adaptor body and extension are further provided with a length extension having first and second ends coupled to and between the adaptor body and extension. The length extension has an internal cavity having an interior surface extending longitudinally through the length extension from the first end to the second end, an external thread disposed at the first end adapted for complimentary threaded retention within the coupling portion of the adaptor body, and a coupling portion having an internal thread disposed on the interior surface and extending longitudinally thereon from the second end of the length extension, wherein the internal thread is adapted to threadably retain the external thread of the extension. The installation of an optional embodiment of the invented system having an adaptor body, length extension and extension such as a fitting extension, filter extension or sieve extension, for instance, allows for the collection of soil gas samples via a continuous internal cavity having one or more outlets wherein the soil gas may enter and travel to the proximal end of the adaptor body for analysis.

An exemplary embodiment of the device may be associated with an automated installation device. Such a device may be robotic in nature, or may be another type of automated device. Alternatively, an exemplary embodiment of the device may be employed by an individual to manually install the device, such as by a hammer.

It is an object of this invention to provide a system for use in the collection of sub-slab soil gas of the type generally described herein, being adapted for the purposes set forth herein, and overcoming disadvantages found in the prior art. These and other advantages are provided by the invention described and shown in more detail below.

### BRIEF DESCRIPTION OF THE DRAWINGS

In addition to the features mentioned above, other aspects of the present invention will be readily apparent from the following descriptions of the drawings and exemplary embodiments, wherein like reference numerals across the several views refer to identical or equivalent features, and wherein:
Figure 1 is a perspective view illustrating an exemplary embodiment of an adaptor body not falling under the scope of the claimed invention.
Figure 2a is a front elevation view of the adaptor body of figure 1.
Figure 2b is a top plan view of the adaptor body of figure 1.
Figure 3a is a front elevation view of an exemplary embodiment of a tubular body in accordance with an aspect of the innovation.
Figure 3b is a top plan view of the tubular body of figure 3a.
Figure 4 is a sectional view of an exemplary embodiment of an adaptor body and tubular body installed within a foundation slab in accordance with an aspect of the innovation.
Figure 5a is a sectional view of the adaptor body and tubular body of Fig. 4 with the installation tool prior to extraction, example not falling under the scope of the claimed invention.
Figure 5b is a sectional view thereof after extraction has occurred with tool shown in figure 5a.

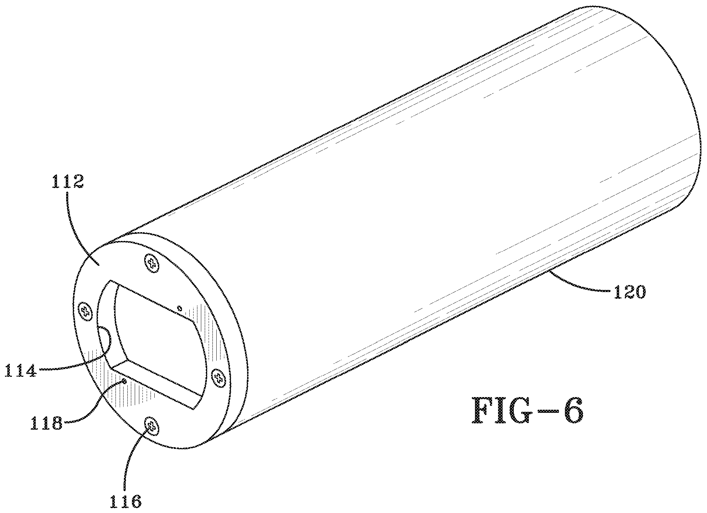

Figure 6 is a perspective view of an exemplary embodiment of the installation tool shown in figures 5a and 5b.
Figure 7 is a front perspective view of a further exemplary embodiment of an adaptor body not falling under the scope of the claimed invention.
Figure 8 is a side view of an exemplary tool being used to install the adaptor device and tubular body of Fig. 7 in accordance with an aspect of the innovation.
Figure 9 illustrates the tool of Fig. 8 being used to remove adaptor body and tubular body of Fig. 7 in accordance with an aspect of the innovation.
Figure 10 illustrates a further view of the extraction process thereof in accordance with an aspect of the innovation.
Figure 11 is a sectional view of an exemplary covering for exemplary embodiments of the adaptor body, example not falling under the scope of the claimed invention.
Figure 12 is a sectional view of the covering shown in figure 11, engaged with an the adaptor body showin in figure 7, installed in a foundation slab.
Figure 13a is a perspective view of an optional exemplary embodiment of a fitting extension component of the invented sampling system in accordance with an aspect of the innovation.
Figure 13b is a front elevation view of the extension of figure 13a.
Figure 13c is a sectional view of the extension of figure 13a.
Figure 14a is a perspective view of another optional exemplary embodiment of a filter extension component of the invented sampling system in accordance with an aspect of the innovation.
Figure 14b is a front elevation view of the extension of figure 14a.
Figure 14c is a sectional view of the extension of figure 14a.
Figure 15a is a perspective view of another optional exemplary embodiment of a sieve extension component of the invented sampling system in accordance with an aspect of the innovation.
Figure 15b is a front elevation view of the extension of figure 15a.
Figure 15c is a sectional view of the extension of figure 15a.
Figure 16a is a perspective view of another optional exemplary embodiment of a length extension component of the invented sampling system in accordance with an aspect of the innovation.
Figure 16b is a front elevation view of the extension of figure 16a.
Figure 16c is a sectional view of the extension of figure 16a.
Figure 17 illustrates a sectional view of an exemplary embodiment of the invented sampling system in use in connection with an exemplary slab in accordance with an aspect of the innovation.
Figure 18 illustrates a sectional view of a further exemplary embodiment of the invented sampling system in use in connection with an exemplary slab in accordance with an aspect of the innovation.
Figure 19 is another example embodiment of a multi-piece adaptor body in accordance with an aspect of the innovation.
Figures 20 and 21 are illustrations of a first portion and a second portion of the multi-piece adaptor body respectively of figure 19.
Figures 22 and 23 illustrates another embodiment of a multi-piece adaptor body in accordance with an aspect of the innovation.
Figure 24 is a flow chart illustrating a method of collecting gas samples in accordance with an aspect of the innovation.

### DETAILED DESCRIPTION OF EXEMPLARY EMBODIMENT(S)

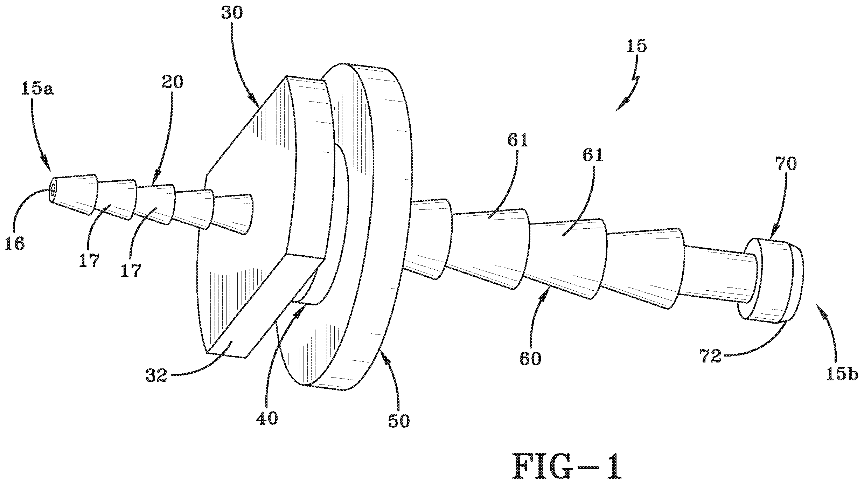

A portion of the following detailed description first discusses prior art devices known for use in sub-slab soil gas analysis, taken and adapted in part from U.S. Patent No. 8,220,347 and U.S. Patent Application No. 13/551,213, both co-owned by the applicant. Reference should be made therein for further details regarding the current state of the art. **Fig. 1** depicts one exemplary embodiment of a known prior art adaptor body. As shown, this particular adaptor body **15** includes a first barbed portion **20,** an external engaging portion **30,** a recess **40,** a collar portion **50,** a second barbed portion **60** and a raised end **70.**

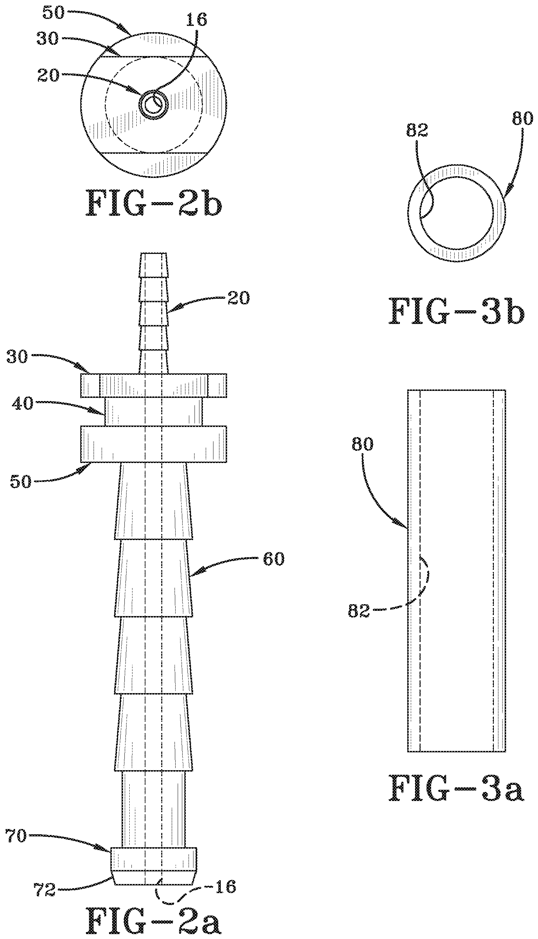

As shown in **Figs. 1-2b****,** the adaptor body includes a proximal end **15a** and a distal end **15b.** Exemplary embodiments of the adaptor body **15,** examples not falling under the scope of the claimed invention, may include a first barbed portion **20,** an external engaging portion **30,** a recess **40,** a collar portion **50,** a second barbed portion **60** and a raised end **70.** As seen in **Figs. 2a-2b****,** adaptor bodies **15** are known to include an internal cavity **16** that axially passes through the length of the adaptor body **15** from the proximal end **15a** to the distal end **15b.** The internal cavity **16** allows gas found in the subsoil to flow through the adaptor body **15** and be read by a soil gas measuring device (not shown) that is connected with the adaptor body **15.** The cross-sectional area and geometry of the internal cavity **16** may be substantially similar throughout the length of the adaptor body **15.**

In this embodiment, example not falling under the scope of the claimed invention, the first barbed portion **20** of the adaptor body **15** is located towards the proximal end **15a** thereof. The first barbed portion **20** generally includes at least one barb **17.** In some examples, not falling under the scope of the claimed invention, the barbs **17** are generally conical in geometry to facilitate the releasable securement of an exemplary embodiment of tubing (not shown) that connects the adaptor body **15** with a soil gas measuring device, such as a SUMMA canister. As such, the first barbed portion **20** is often manufactured from readily available sizes of round stock, thereby reducing manufacturing time and expense, although it may have any number of cross-sectional geometries depending upon the cross-sectional geometry of the tubing that connects the device with the soil gas measuring device. Typically, the end-most barb located towards the proximal end **15a** may include a generally rounded face that facilitates the insertion of the first barbed portion **20** within the inner cavity of the tubing that connects the adaptor body **15** with a soil gas measuring device. In some exemplary embodiments, examples not falling under the scope of the claimed invention, there are no gaps or land sections between the barbs **17.** In such embodiments, the end of the barb with the smaller outside diameter may abut the next barb's end with the larger outside diameter.

Typically, when the barbs **17** bear a fixed dimensional relationship to the inside diameter of the tubing that connects the adaptor body **15** with a soil gas measuring device, the tubing will form a reliable pressure tight seal to the adaptor body **15.** In one embodiment, example not falling under the scope of the claimed invention, the large diameter ends of the barbs **17** may be approximately 0.30", while the inner diameter of the tubing may be approximately 0.25". This type of press-fit may cause the tube to spread or flare so that after the first barbed portion **20** is fully inserted within the tube, the tube will return to its original size after releasable securement. Furthermore, in some embodiments, examples not falling under the scope of the claimed invention, the conical shape of the barb **17,** which is wider toward the point of insertion, provides a manner of anchoring the flexible tubing body **80** during the insertion process so that the tubing body **80** does not move in relation to the adaptor body **15** during insertion (see **Figs. 3a** and **3b**).

The external engaging portion **30** of the adaptor body **15** includes an external engaging portion, in this example, not falling under the scope of the claimed invention, a flange **32** adapted to engage a wrench or other tool. The external engaging portion **30** is shown here to be of substantially circular shape, wherein a portion of opposed sides are substantially parallel to one another. However, other shapes are also possible. In another example, not falling under the scope of the claimed invention, the outside geometry of the external engaging portion **30** is substantially hexagonal or square in geometry to allow a user to engage thereto with a wrench or other tool. While this embodiment of the fastener engaging portion contains a flange, other embodiments are known to include a component, which allows for engagement with different tools, including a screwdriver head component, a hex head component, TORX head component, drill head component, or another engaging structure that can tighten and/or move the adaptor body **15** by rotational movement.

In some embodiments, examples not falling under the scope of the claimed invention, the engaging portion **30** may be integral with the first barbed portion **20,** such as by molding or turning. In other embodiments, examples not falling under the scope of the claimed invention, the engaging portion **30** may be attached to the first barbed portion **20,** such as by welding. Alternatively, the first barbed portion **20** may be removably attached to the engaging portion **30** so that the device **15** may be used with tubing of various sizes.

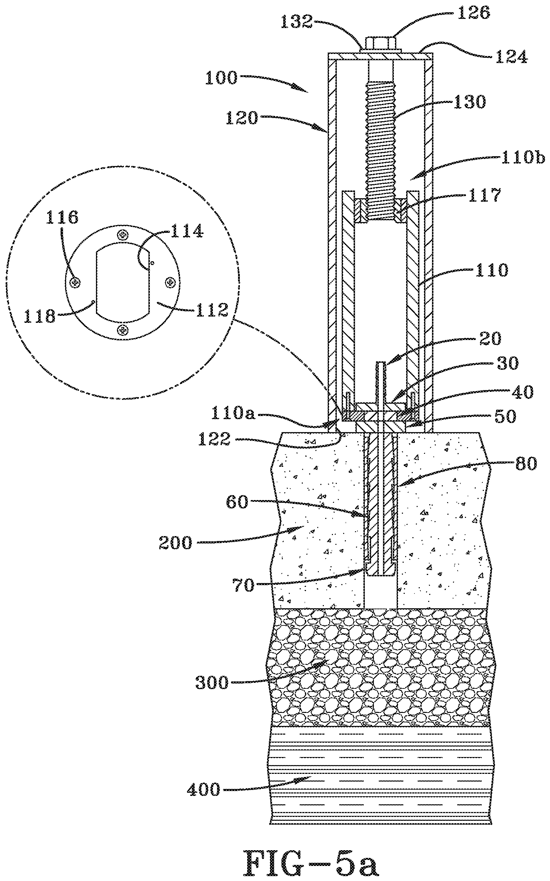

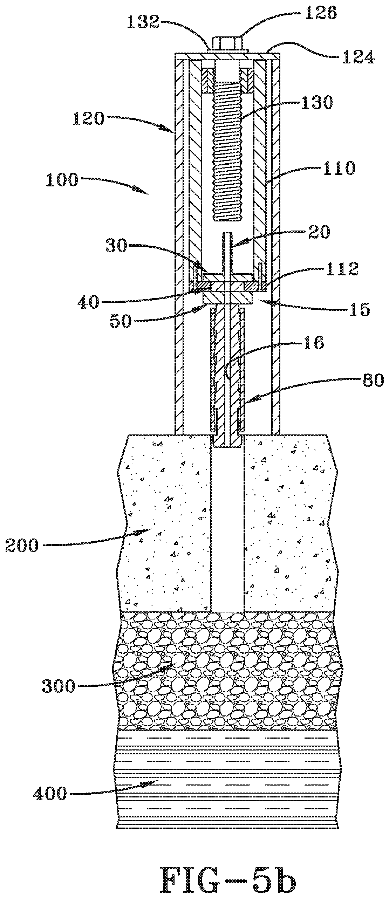

In exemplary embodiments, examples not falling under the scope of the claimed invention, the collar portion **50** is generally joined to the engaging portion **30** by an optional recess area **40** which has a generally cylindrical shape. The geometry of the recess area **40** may be of various cross-sectional areas, although a substantially round cross-sectional area may simplify manufacturing. The optional recess area **40** may also allow a wrench or other tool **100** to engage the engaging portion **30** and/or the collar portion **50** of the adaptor body **15** to facilitate the installation and/or removal of the adaptor body **15.** In one example, not falling under the scope of the claimed invention, as seen in **Figs. 5a** and **5b****,** an individual may use the tool **100** to install and/or remove the device.

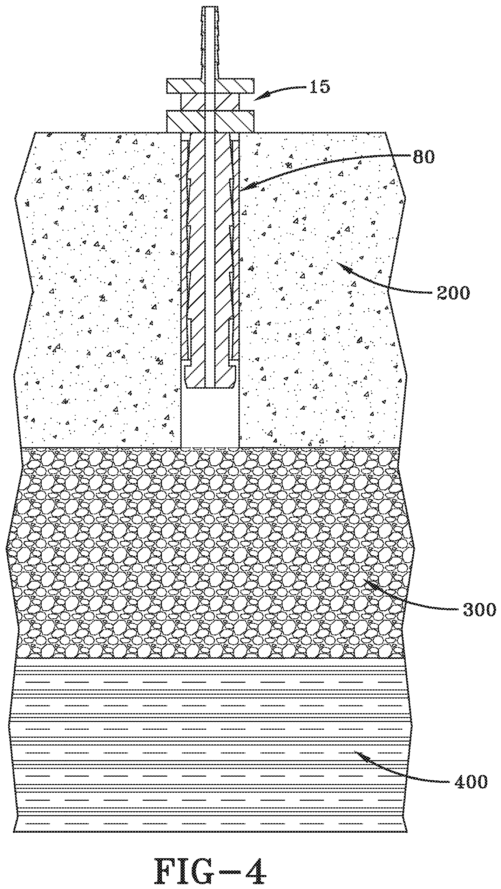

In this example, not falling under the scope of the claimed invention, the entire collar portion **50** is substantially circular in cross-sectional geometry, wherein the diameter is substantially the same along the length thereof. The cross-sectional geometry of the collar section is typically substantially circular to facilitate the insertion of adaptor body **15** within in a corresponding hole in the slab that is likewise substantially circular. However, in other embodiments, examples not falling under the scope of the claimed invention, the collar portion **50** may also be of other cross-sectional shapes. As aforementioned, one of the main functions of the collar portion **50** is to provide a surface for a tool to contact the adaptor body **15** for installation and/or removal of the adaptor body **15** during use. In some embodiments, examples not falling under the scope of the claimed invention, during installation of the adaptor body **15,** once the distal end of the collar portion **50** engages a portion of the slab, the device is fully engaged, as depicted in **Fig. 4****.** In some embodiments, examples not falling under the scope of the claimed invention, the collar portion **50** may taper inward (not shown) from a larger diameter as it extends longitudinally from the proximal end **15a** of the adaptor body **15.** The taper may facilitate the securement of the tubular body **80** to the adaptor body **15** during installation. In some embodiments, examples not falling under the scope of the claimed invention, the collar portion **50** may be integral with the engaging portion **30,** and the recess portion **40** such as by molding or turning. In other embodiments, the engaging portion **30** and the collar portion **50** may be attached to the recess portion **40,** such as by welding.

As shown in the illustration of a known adaptor body as depicted in **Figs. 1-2b****,** the second barbed portion **60** of the adaptor body **15** may be located towards the distal end **15b** thereof. The second barbed portion **60** generally includes at least one barb **61.** In some examples, not falling under the scope of the claimed invention, the barbs **61** are generally conical in geometry to facilitate the releasable securement of the tubing body **80,** as seen in **Fig. 4****.** As such, the second barbed portion **60** may be manufactured from readily available sizes of round stock, thereby reducing manufacturing time and expense. However, it should be realized that the second barbed portion **60** may have any number of cross-sectional geometries, depending upon the cross-sectional geometry of the tubular body **80.** Typically, the barbs **61** may taper from a larger diameter from the distal end **15b** thereof. However, in other embodiments, examples not falling under the scope of the claimed invention, some or all of the barbs **61** may taper from a larger diameter from the proximal end **15a** thereof. In some exemplary embodiments, there are no gaps or land sections between the barbs **61.** In such embodiments, the end of the barb with the smaller outside diameter may abut the next barb's end with the larger outside diameter.

Typically, when the barbs **61** bear a fixed dimensional relationship to the inside diameter of the tubular body **80** there will form a reliable pressure tight seal therebetween. In one embodiment, example not falling under the scope of the claimed invention, the large diameter ends of the barbs **61** may be approximately 0.79", while the inner diameter of the tubular body **80** may be approximately 0.75". This type of press-fit may cause the tube to spread or flare so that after the second barbed portion **60** is fully inserted within the tubular body **80,** the tubular body **80** will return to its original size after releasable securement.

The exemplary embodiment raised end **70** of **Fig. 1****,** example not falling under the scope of the claimed invention, can be seen in more detail in **Fig. 2a****.** As shown, the raised end **70** is a substantially cylindrical shape, although other shapes are possible. This example of the raised end include a chamfer **72** or rounded end located at the distal end **15b** of the adaptor body **15,** which facilitates the insertion of the raised end **70** within the inner cavity of the tubular body **80.** Typically, but not necessarily, the outside diameter of the raised end **70** is approximately the same diameter of the largest diameter of the barbs **61.** However, in other embodiments, examples not falling under the scope of the claimed invention, the outside diameter of the raised end **70** may be greater or less than the outside diameter of the barbs **61.**

Adaptor bodies may be made of any number of materials, such as, for example, brass, plastics, or other metals, such as stainless steel. Whatever material is selected, the resulting adaptor body **15** should have sufficient strength to withstand the insertion and extraction of the adaptor body within the slab. Furthermore, it is preferred that the material is easy to manufacture, if machined.

As shown in **Fig. 4****,** during installation the second barbed portion **60** and raised end **70** has disposed thereon a tubular body **80.** Known tubular bodies are made of materials flexible enough to allow securement of the tubular body **80** around the second barbed portion **60** and the raised end **70,** along with providing an air-tight seal between the adaptor body **15** and the inside diameter of a hole drilled into the slab of a basement or foundation of a building. In one particular example, the tubular body **80** is fabricated from low-VOC content Silicone tubing, available from Dow-Corning. As aforementioned, the interior cavity **82** of the tubular body **80** is adapted to receive the raised end **70** and second barbed portion **60** of the adaptor body **15** and may be of any shape required to produce mating engagement therebetween. Furthermore, in some embodiments, examples not falling under the scope of the claimed invention, one or more optional seals (not shown) may be placed around the barbs **61** of the second barbed portion **60** to help effectuate an air-tight seal between the tubular body **80** and the adaptor body **15.** It is also known to coat or otherwise cover the interior cavity of the tubular body **80** and/or the exterior of the second barbed portion **60** and/or raised end **70** with a high friction material for facilitating the engagement therebetween. Tubular body lengths may vary, depending upon the length between the collar portion **50** and the distal end **15b** of the adaptor body **15.** In one example, the length of the tubular body **80** is approximately 3.75 inches. Likewise, the outside diameter of exemplary embodiments of the tubular body **80** may vary depending upon the inside diameter of the hole drilled or bored within the slab of concrete or other foundation of a building or other structure.

Particularly, in a normal assembled installation state as seen in **Fig. 4****,** the tubular body **80** is wedged between the second barbed portion **60** and/or the raised end **70,** and the inside wall of the drilled or cored hole that extends through the foundation slab. In some methods of installation, the tubular body **80** is releasably secured around the second barbed portion **60** before the device is installed within the cored hole. In other embodiments, examples not falling under the scope of the claimed invention, an installation tool **100,** as seen in **Figs. 5a** and **5b** may apply pressure on a portion of the adaptor body **15** to effectuate installation within the cored hole.

During installation and/or extraction the tool **100** may include an inner body **110** that includes a contacting portion **112** at a first end **110a** with an aperture **114** that complements the cross-sectional geometry of the engaging portion **30.** In one example, not falling under the scope of the claimed invention, the contacting portion **112** may be secured to the inner body **110** by one or more fasteners **116.** However, in other examples, examples not falling under the scope of the claimed invention, the contacting portion **112** may be integral with the inner body **110,** such as by welding, etc. The tool **100** may facilitate installation by allowing an individual to place the inner body **110** over and/or around the engaging portion **30** wherein at least a portion of the inner face of the contacting portion **112** of the tool **100** may contact the engaging portion **30** and/or at least a portion of the outer face of the contacting portion **112** may contact the collar portion **50** to allow the individual to strike a second portion of the tool **100** with a hammer or other object to facilitate installation of the adaptor body **15.**

In other embodiments, examples not falling under the scope of the claimed invention, an installation tool **100,** as seen in **Figs. 5a** and **5b** may apply pressure on a portion of the adaptor body **15** to effectuate installation within the cored hole. In this embodiment, the contacting portion **112** may be positioned over and around the engaging portion **30,** wherein at least a portion of the inner face of the contacting portions **112** of the tool **100** may contact the engaging portion **30** and/or at least a portion of the outer face of the contacting portion **112** may contact the collar portion **50** when the inner body **110** is turned approximately ninety degrees. In some examples, examples not falling under the scope of the claimed invention, a surface of the contacting portion **112** or inner body **110** may include one or more raised surfaces **118** or other stopping device adapted to prohibit an individual from turning the inner body **110** of the tool **100** beyond a desired location, to effectuate contact with the device for installation and/or removal.

Exemplary embodiments, examples not falling under the scope of the claimed invention, of the inner body **110** are tubular in cross-sectional geometry. In some examples, it may be preferred that the inner body **110** is substantially cylindrical. The inner body **110** may include a threaded surface **117** located towards a second end **110b.** The threaded surface **117** may be integral with the inner body **110,** or may be a separate piece adhered to within or to the inner body **110.** The threaded surface **117** is adapted to complement the threaded surface of a bolt or other threaded fastener **130,** described later and seen in **Figs. 5a** and **5b****.**

In some examples, examples not falling under the scope of the claimed invention, the tool **100** may further include an outer body **120** that is tubular in cross-sectional geometry. In the example depicted in **Figs. 5a** and **5b****,** the outer body **120** is substantially cylindrical in cross-sectional geometry to complement the geometry of the inner body **110.** The first end of the outer body **120** contains an aperture **122** large enough to allow the outer body **120** to be positioned around the inner body **110.**

Furthermore, some exemplary embodiments of the outer body **120,** examples not falling under the scope of the claimed invention, may include a top portion **124** with an aperture **126** located towards the second end thereof. In the example depicted in **Figs. 5a** and **5b****,** not falling under the scope of the claimed invention, the top portion **124** is a plate adhered to the second end of the outer body **120.** However, in other embodiments, examples not falling under the scope of the claimed invention, the top portion **124** may be optionally secured with the outer body **120** by fasteners or other securing devices.

During one exemplary method of extraction of the adaptor body **15,** example not falling under the scope of the claimed invention, an individual may releasably secure the inner body **110** with the device as aforementioned. After the inner body **110** is secured with the adaptor body **15,** the individual may position the outer body **120** around the inner body **110,** as depicted in **Figs. 5a** and **5b****,** wherein at least a portion of the outer body **120** engages the concrete slab **200.** The individual places a bolt or other threaded fastener **130** down through the aperture **126** located towards the second end. An optional washer **132** or similar device may be used to help distribute the force exerted on the head of the threaded fastener **130.** An individual may then rotationally engage the threaded fastener **130** with the complementary threaded surface **117,** effectuating the removal of the device, as seen in **Fig. 5b****.**

Likewise, the complementary portion of the tool **100** may be placed over and around the engaging portion **30,** then rotated approximately ninety degrees so that the adaptor body **15** may be removed. In other embodiments, an installation tool **100,** as seen in **Figs. 5a** and **5b** may apply pressure on a portion of the adaptor body **15** to effectuate installation and/or removal within the cored hole.

In some installation methods, the adaptor body is pressed downward in the cored hole until the collar engages the slab. However, some exemplary embodiments of the adaptor body may install wherein the adaptor body is mounted flush to accommodate a larger hole that is drilled deep enough to allow the first barbed portion to lie below the surface of the slab. In this exemplary embodiment, the entire adaptor body is mounted at least flush, if not below the surface level of the slab, decreasing the likelihood that the device may be damaged after installation. Installation of exemplary embodiments of the adaptor body may be installed into a one-inch diameter hole cored through the slab of concrete or other foundation material. The cored hole provides a smoother bonding surface and can be accomplished using a standard, hand-held coring machine. Exemplary embodiments of the adaptor body may be driven into the cored hole using a hammer or similar device.

Installation of exemplary embodiments of the adaptor body may force the flexible silicone tubular body located on at least a portion of the exterior surface thereof against the interior wall of the cored hole, effectuating an air-tight, or almost air-tight, seal between the cored slab and the device. Exemplary embodiments of the adaptor body may then be connected to a portion of the sampling tubing via an air-tight barbed fitting.

As mentioned above, it is also possible to manually install known adaptor body devices and accouterments within the foundation of a home, building or other surface that contains a foundation made of concrete or similar substance. Whether designed for manual or automatic operation, known devices, as well as those of the present invention, may be generally associated with an automatic soil gas reading device (not shown). Such a soil gas reading device is operative to automatically read the VOC levels of the native material **400** such as soil and/or gravel backfill **300** contained under the foundation wherein such devices are installed, such as depicted in **Figs. 4-5b****.**

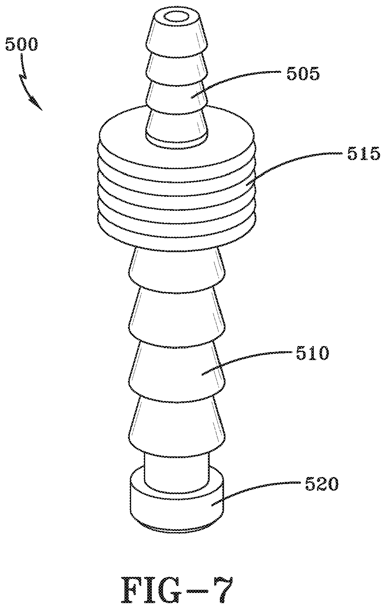

**Fig. 7** illustrates another exemplary embodiment of a known adaptor body **500.** In this embodiment, example not falling under the scope of the claimed invention, the adaptor body **500** has a first barbed end **505** and second barbed end **510.** The adaptor body **500** also has a male threaded collar **515** separating the first barbed portion **505** and the second barbed portion **510.** A raised end **520** is provided at the distal end of the second barbed portion **510.** As discussed herein, the first barbed portion **505** is sized and adapted to facilitate a connection between the adaptor body **500** and a soil gas measuring device (not shown). The second barbed portion **510** is sized and adapted for insertion into a tube **80.** The adaptor body **500** may have a unitary design or it may be constructed of modular sections. A modular construction would allow the first **505** and second **510** barbed portions and the threaded collar **515** to be changed to accommodate different sized components, thereby giving the adaptor body **500** greater flexibility. The adaptor body **500** may be made of brass or other material sufficiently strong to withstand the installation and extraction process. To allow soil gas samples to be taken, the adaptor body **500** has an internal passageway through which the soil gas may travel.

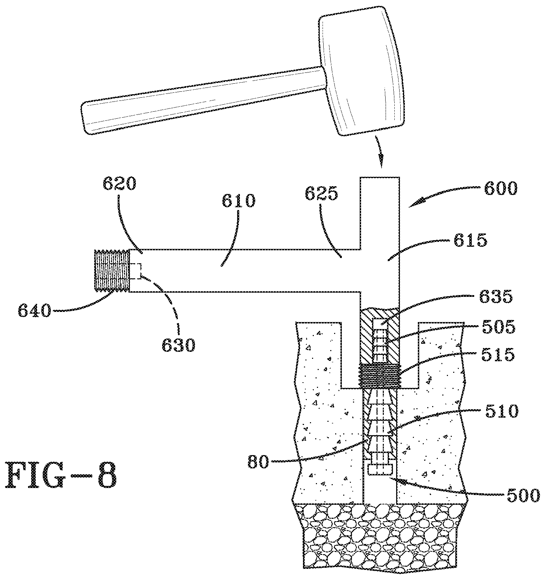

The adaptor body **500,** example not falling under the scope of the claimed invention, is also known to be installed and extracted using an exemplary embodiment of a tool **600.** **Fig. 8** illustrates another exemplary tool **600** used for the installation and extraction of the adaptor body **500.** As shown, a known tool **600** has a T-shaped body. The tool **600** includes a stem portion **610** and a handle portion **615.** As shown in **Fig. 8****,** the stem **610** has a first end **620** and second end **625.** The second end **625** intersects the handle **615** so that the stem portion **610** extends substantially perpendicular from the handle **615.** The first end **620** of the stem portion **610** is threaded and has an extraction cavity **630** therein. The threaded portion **640** of the first end **620** is a predetermined length sufficient for extraction of the adaptor body **500,** as will be discussed herein. To install the adaptor body **500,** the handle has at least one installation cavity **635** therein. As shown in **Fig. 8****,** the installation cavity **635** is adapted to accommodate the first barbed end **505** of the adaptor body **500.**

To install the adaptor body **500** using the tool 600, the first barbed end **505** is inserted into the installation cavity **635** in the handle **615.** The tool **600** rests on a surface created by the threaded collar **515.** A mallet or other device is then used to strike the end of the handle **615** opposite of the installation cavity **635** in order to force the adaptor body **500** into the drilled core (as shown in **Fig. 8**). After installation of the adaptor body **500,** the tool **600** is simply removed from the adaptor body **500** and the adaptor body **500** is connected to a soil gas measuring device.

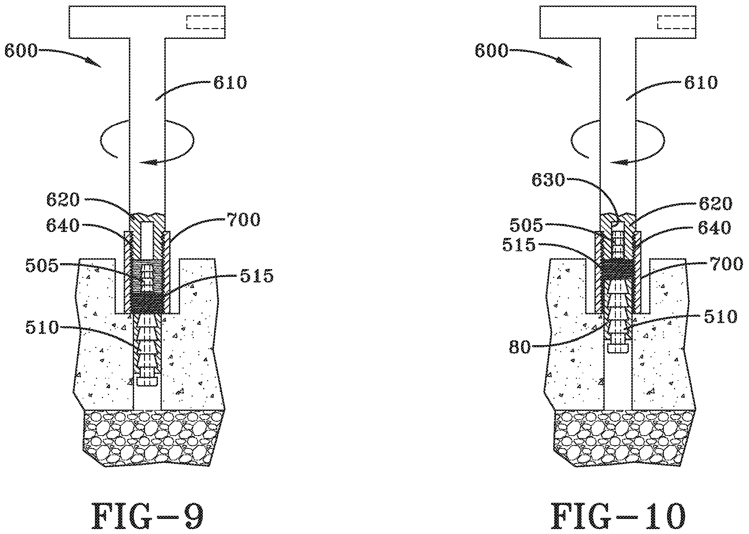

A typical extraction of the adaptor body **500** is illustrated in **Figs. 9** and **10****.** The threaded portion **640** of the first end **620** of the stem **610** is threaded into the coupling **700.** The coupling **700** is threaded completely onto the pre-determined length of the threaded portion **640.** The tool **600** is then used to thread the coupling **700** onto the threaded collar **515** of the adaptor body **500.** The coupling **700** can be threaded onto the adaptor body **500** then the tool **600** may be threaded into the coupling **700.**

To extract the adaptor body **500** from the core, a user continues to turn the tool **600.** Due to the threaded connection between the adaptor body **500** and the coupling **700,** the adaptor body **500** is forced upward into the coupling **700.** As the adaptor body **500** is raised upward as a result of the rotational motion of the tool **600,** the first barbed portion **505** of the adaptor body **500** is inserted into the extraction cavity **630.** This enables the adaptor body **500** to be moved upward without the need to readjust the tool **600.** Once the threaded collar **515** comes into contact with the first end **620** of the tool **600,** the tool **600** can be used to lift the adaptor body **500** from the drilled core.

In still other exemplary embodiments, rather than having a male threaded portion at the first end **620,** the first end may have a female threaded portion (not shown in the figures). The female threaded portion may be sufficiently sized to be threaded onto the threaded collar **515** of the adaptor body **500.** In this embodiment, the need for a coupling **700** may be avoided.

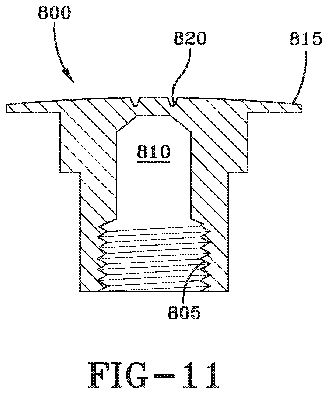

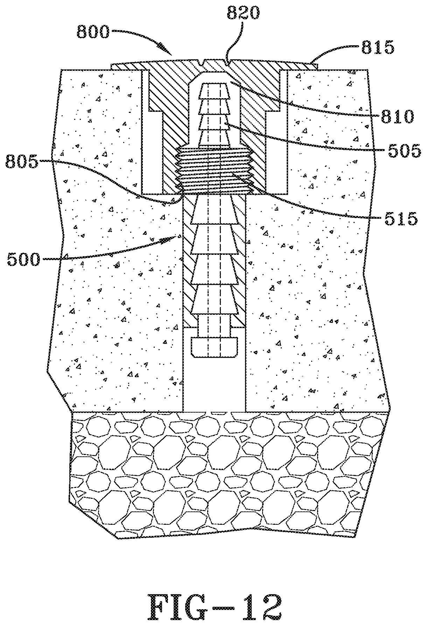

After the adaptor body **500** is installed, a covering **800,** example not falling under the scope of the claimed invention, may be used to cover the hole created and to protect the adaptor body **500.** As illustrated in **Fig. 11****,** the covering **800** includes a threaded portion **805,** a cavity **810,** a flange **815,** and slotted portion **820.** **Fig. 12** further illustrates the exemplary covering **800** joined with the adaptor body **500.** As shown, the covering **800** is lowered onto the adaptor body **500** so that the first barbed portion **505** is recessed within the cavity **810.** To secure the covering **800,** the threaded portion **805** of the covering **800** is threaded over the threaded portion **515** of the adaptor body **500.** The proper covering **800** fit results in the flange **815** of the covering **800** resting atop and being drawn to the surface of the material in which the adaptor body **500** rests. To fully tighten down the covering **800,** a screwdriver or other similar device may be used in the slotted portion **820.**

To stand up to wear and tear, the covering **800** may be constructed from metal or other materials that are strong enough to protect the adaptor body **500.** Before the covering **800** is applied to the adaptor body **500,** a cap (not shown in the figures) may be placed over the first barbed portion **505** to prevent debris from entering the adaptor body **500.** Although the slotted portion **820** shown is for a spanner screwdriver, it also known to be designed to accommodate flat, Phillips, and hex head screwdrivers as well as other tools.

While the advent of the prior art devices generally described above has largely brought with it vastly improved techniques to the field sub-slab soil gas collection, sampling and analysis, recent advances in the field have developed a surprising increase in demand for soil gas collection and analysis at points beneath the slab. While preferred known techniques are viewed as superior in that they, for example, provide reduced or eliminated leakage, are unobtrusive with respect to the interior of a building when installed, and have dramatically reduced the cost and difficulties of installation over previously-used devices, they have been found impractical to use in connection with other, external sampling devices placed within the sampling hole or used to collect samples at points beneath the slab.

There is also a desire in the field for the ability to collect for analysis samples of sub-slab soil gas at a source that lies beneath the slab itself, or coincident with or adjacent to the base of the slab. Known prior art devices provide no extensibility, and therefore must be manufactured at a length appropriate to reach the desired point of collection or a large-diameter hole must be cored to a further depth in order to seat known devices lower in relation to the top surface of the slab. It has also been discovered that sub-slab soil gas collection at points at or beneath the bottom surface of the slab is often impractical with known devices due to contamination, blockage and clogging, and moisture collection concerns.

The invented system also provides certain improvements in the collection, sampling and analysis process of sub-slab soil gas in view of repeated sampling that often occurs at multiple locations. For instance, foundation slab thicknesses may often vary from location to location to such an extent that those in the field must either obtain multiple sizes of the prior art devices described above, or obtain often unobtainable knowledge of slab thickness prior to coring, in order to align the ingress opening of the device at a precise position relative to the top or bottom surface of the slab involved.

To overcome these and other drawbacks with the current art, the present invention utilizes in part an improved adaptor body relative to known devices. As will be explained in further detail below, exemplary embodiments of the new adaptor body have a length and proximal and distal ends, and are generally provided with a first barbed portion disposed at the proximal end of the adaptor body, a second barbed portion disposed at the distal end of the adaptor body, a collar portion disposed between the first barbed portion and the second barbed portion, and an internal cavity having an interior surface and passing through the length of the adaptor body. The aforementioned features are similar in function and variety to those described above in exemplary prior art adaptor bodies, for example adaptor bodies **15** and **500** shown in **Figs. 1** and **7****,** respectively. Exemplary adaptor bodies used in the invented system, however, also include at least a coupling portion having an internal thread disposed on the interior surface and extending longitudinally thereon from the distal end of the adaptor body. In this way, the internal cavity through which soil gas is collected and drawn from the proximal end of the adaptor body for analysis may be extended via other extension components of the invented system, as further described herein.

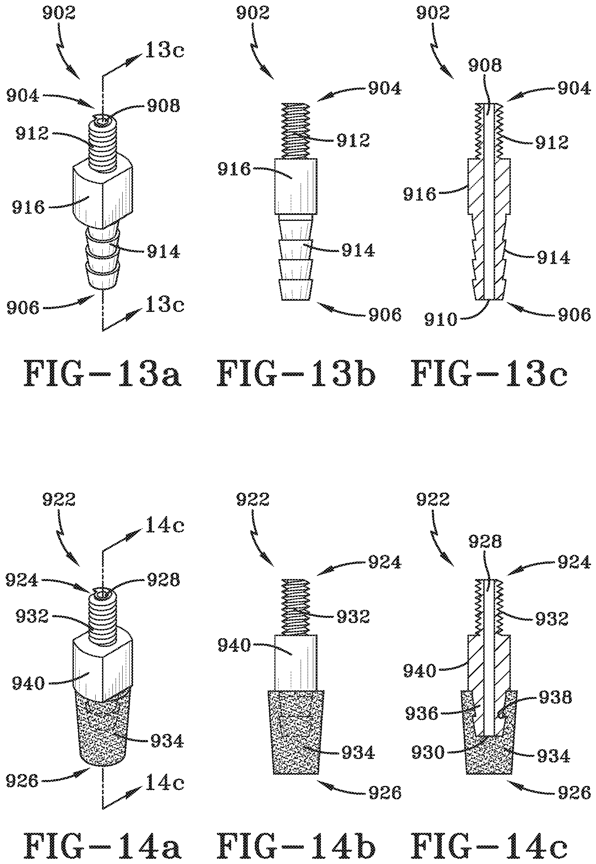

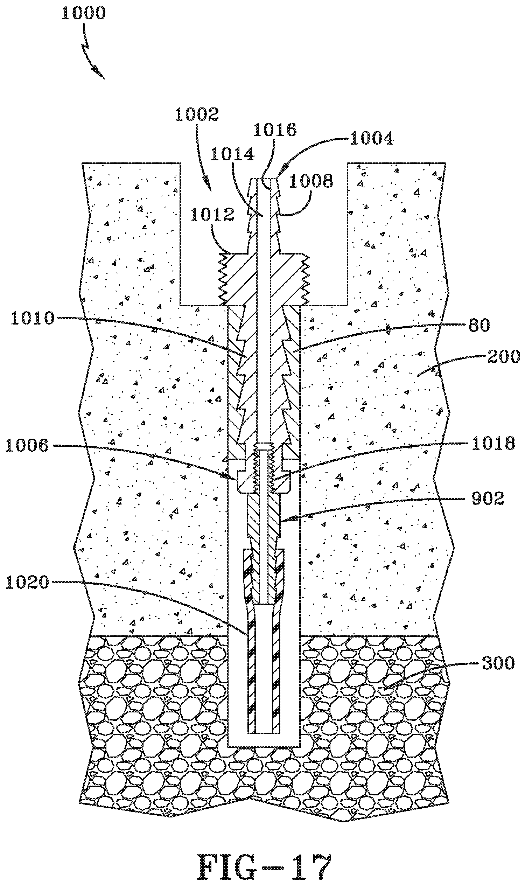

One exemplary component of the invented system may be, for instance, a fitting extension **902** as illustrated in **Figs. 13a, 13b** and **13c. Fig. 13a** shows a perspective view of an exemplary embodiment of a fitting extension **902,** **Fig. 13b** shows a front elevation view of the fitting extension **902,** and **Fig. 13c** shows a sectional view of the fitting extension **902** (taken through line **13c-13c** shown in **Fig. 13a**) from the perspective of **Fig. 13b****.** Referring to these figures, the fitting extension **902** is shown having first **904** and second **906** ends generally defining a length therebetween. An internal cavity **908** extends longitudinally through the extension **902** from the first end **904** to an outlet **910** at the second end **906.** In preferred embodiments, the diameter of the cavity **908** is commensurate with or equal to the diameter of the internal cavity of the adaptor body (e.g., see **Figs. 17-18**).

The exemplary fitting extension **902** is shown having an attachment means that is complimentary with an improved embodiment of the adaptor body as further detailed herein below. The fitting extension **902** preferably utilizes an external thread **912** disposed at the first end **904,** which is adapted for complimentary threaded retention within a coupling portion of the adaptor body. The fitting extension **902** may also include a fitting portion **914** disposed at the outlet **910** at the second end **906** of the extension **902.** Generally, the fitting portion **914** may be embodied in a number of structures complimentary with other sampling devices or components. In a preferred embodiment of the fitting extension **902** as shown in **Fig. 13a****,** the fitting portion is a barb portion **914** disposed at the outlet **910.** The barbed portion **914** generally includes at least one conical-frustum shaped barb, for example, and facilitates the releasable securement of tubing to connect the system to other sampling devices or to extend the effective length of the internal cavity and thus the sampling depth.

The fitting extension **902** may further include an external engaging portion **916.** The external engaging portion **916** generally provides a geometry suitable for engagement with a hand tool such as a wrench or other tool that is useful for assembling and disassembling the components of the invented sampling system. In one embodiment, the external engaging portion **916** is disposed between the external thread **912** and the barbed portion **914.** The external engaging portion **916** depicted here is of substantially circular shape with a pair of opposed sides that are substantially parallel to one another. The opposing sides may be described as secants of the substantially circular shape. In other embodiments, the external engaging portion may be substantially hexagonal or square in cross-sectional shape, or other such geometries suitable for use with a wrench or other tools to provide a mechanical advantage.

Another exemplary component of the invented system may be, for instance, a filter extension **922** as illustrated in **Figs. 14a, 14b** and **14c. Fig. 14a** shows a perspective view of an exemplary embodiment of a filter extension **922,** **Fig. 14b** shows a front elevation view of the filter extension **922,** and **Fig. 14c** shows a sectional view of the filter extension **922** (taken through line **14c-14c** shown in **Fig. 14a**) from the perspective of **Fig. 14b****.** Referring to these figures, the filter extension **922** is shown having first **924** and second 926 ends generally defining a length therebetween. An internal cavity **928** extends longitudinally through the extension **922** from the first end **924** to an outlet **930** at the second end **926.** In preferred embodiments, the diameter of the cavity **928** is commensurate with or equal to the diameter of the internal cavity of the adaptor body (e.g., see **Figs. 17-18**).

The exemplary filter extension **922** is shown having an attachment means that is complimentary with an improved embodiment of the adaptor body as further detailed herein below. The filter extension **922** preferably utilizes an external thread **932** disposed at the first end **924,** which is adapted for complimentary threaded retention within a coupling portion of the adaptor body. The filter extension **922** may also include a filter element **934** disposed at the outlet **930** at the second end **926** of the extension **922.** In some embodiments, the filter extension **922** includes a barbed portion **936** with the filter element **934** attached thereto. The barbed portion **936** generally includes at least one conical-frustum shaped barb for retainment within an attachment aperture by complimentary engagement between one or more internal ribs **938** of the filter element **934.** In one embodiment, the filter element **934** is made of a sintered porous metal.

The filter extension **922** may further include an external engaging portion **940.** The external engaging portion **940** generally provides a geometry suitable for engagement with a hand tool such as a wrench or other tool that is useful for assembling and disassembling the components of the invented sampling system. In one embodiment, the external engaging portion **940** is disposed between the external thread **932** and the barbed portion **936** or filter element **934.** The external engaging portion **940** depicted here is of substantially circular shape with a pair of opposed sides that are substantially parallel to one another. The opposing sides may be described as secants of the substantially circular shape. In other embodiments, the external engaging portion may be substantially hexagonal or square in cross-sectional shape, or other such geometries suitable for use with a wrench or other tools to provide a mechanical advantage.

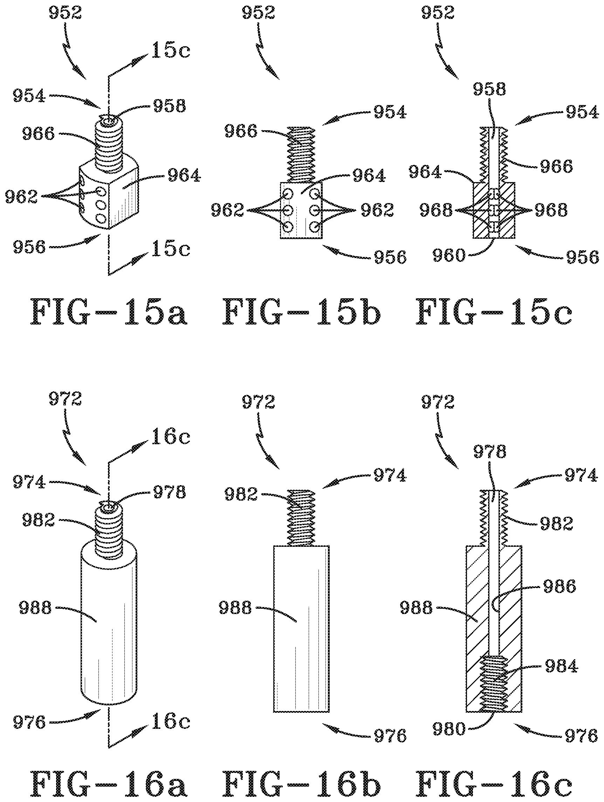

Another exemplary component of the invented system may be, for instance, a sieve extension **952** as illustrated in **Figs. 15a, 15b** and **15c. Fig. 15a** shows a perspective view of an exemplary embodiment of a sieve extension **952,** **Fig. 15b** shows a front elevation view of the sieve extension **952,** and **Fig. 15c** shows a sectional view of the sieve extension **952** (taken through line **15c-15c** shown in **Fig. 15a**) from the perspective of **Fig. 15b****.** Referring to these figures, the sieve extension **952** is shown having first **954** and second **956** ends generally defining a length therebetween. An internal cavity **958** extends longitudinally through the extension **952** from the first end **954** to an outlet **960** at the second end **956.** In preferred embodiments, the diameter of the cavity **958** is commensurate with or equal to the diameter of the internal cavity of the adaptor body (e.g., see **Figs. 17-18**).

The sieve extension **952** may include a plurality of lateral outlets **962** each intersecting with the internal cavity **958** to provide alternate pathways through which sub-slab soil gas may enter the system. The lateral outlets **962** are depicted in **Figs. 15a-15c** in addition to the primary outlet **960;** however those skilled in the art will appreciate that the primary outlet **960** may be left open or closed in various embodiments of the invention. In preferred embodiments, six lateral bores, or outlet cavities **968,** intersecting with the internal cavity **958** are provided for a total of twelve lateral outlets **962,** although more or less may be provided without departing from the invented system. For example, while the preferred embodiment shown is provided with three pair of outlet cavities **968** extending laterally through the sieve extension **952** - in an intersecting "X" pattern - any practical number and configuration that provides alternate pathways for sub-slab soil gas collection is considered known and encompassed by the instant invention.

In some embodiments, the plurality of lateral outlets **962** is located on an external engaging portion **964** of the sieve extension **952.** The external engaging portion **964** depicted here is of substantially circular shape with a pair of opposed sides that are substantially parallel to one another. The opposing sides may be described as secants of the substantially circular shape. In other embodiments, the external engaging portion may be substantially hexagonal or square in cross-sectional shape, or other such geometries suitable for use with a wrench or other tools to provide a mechanical advantage.

The exemplary sieve extension **952** is shown having an attachment means that is complimentary with an improved embodiment of the adaptor body as further detailed herein below. The fitting extension **952** preferably utilizes an external thread **966** disposed at the first end **954,** which is adapted for complimentary threaded retention within a coupling portion of the adaptor body.

Another exemplary component of the invented system may be, for instance, a length extension **972** as illustrated in **Figs. 16a, 16b** and **16c. Fig. 16a** shows a perspective view of an exemplary embodiment of a length extension **972,** **Fig. 16b** shows a front elevation view of the length extension **972,** and **Fig. 16c** shows a sectional view of the length extension **972** (taken through line **16c-16c** shown in **Fig. 16a**) from the perspective of **Fig. 16b****.** Referring to these figures, the length extension **972** is shown having first **974** and second **976** ends generally defining a length therebetween. An internal cavity **978** extends longitudinally through the extension **972** from the first end **974** to an outlet **980** at the second end **976.** In preferred embodiments, the diameter of the cavity **978** is commensurate with or equal to the diameter of the internal cavity of the adaptor body (e.g., see **Figs. 17-18**). The exemplary length extension **972** is also shown having an attachment means that is complimentary with an improved embodiment of the adaptor body as further detailed herein below. The length extension **972** preferably utilizes an external thread **982** disposed at the first end **974,** which is adapted for complimentary threaded retention within a coupling portion of the adaptor body.

While a length extension **972** component may simply be utilized to extend the effective sampling depth of the invented system, in preferred embodiments, the length extension **972** is coupled to and between an improved adaptor body and an extension - e.g., the fitting extension **902,** the filter extension **922** or the sieve extension **952.** In those embodiments, the length extension **972** is further provided with a coupling portion **984** disposed at the second end, wherein the length extension **972** is releasably securable to one of the aforementioned extensions, for instance. In preferred embodiments, the coupling portion **984** is provided as an internal thread disposed on the interior surface **986** of the internal cavity **978.** The internal thread extends longitudinally on the interior surface **986** from the second end of the length extension, and is adapted to threadably retain the external thread of a second extension (e.g., **912, 932** or **966**).

Some embodiments of the length extension **972** may further include an external engaging portion **988.** The external engaging portion generally provides a geometry suitable for engagement with a hand tool such as a wrench or other tool that is useful for assembling and disassembling the components of the invented sampling system, or may simply be provided as a circular surface for hand gripping, as shown in **Figs. 16a-16c****.** The external engaging portion may also be, for example, substantially circular in shape with a pair of opposed sides that are substantially parallel to one another, as described in connection with other extension embodiments if desired. The opposing sides may be described as secants of the substantially circular shape. In other embodiments, the external engaging portion may be substantially hexagonal or square in cross-sectional shape, or other such geometries suitable for use with a wrench or other tools to provide a mechanical advantage.

Turning to **Fig. 17****,** a sectional view of an exemplary embodiment of the invented sampling system **1000** in use in connection with an exemplary slab **200** and native material or backfill **300** in illustrated. The invented system **1000** includes an improved adaptor body **1002,** example not falling under the scope of the claimed invention, having a length and proximal **1004** and distal **1006** ends. The adaptor body **1002** generally includes a first barbed portion **1008** disposed at the proximal end **1004** and a second barbed portion **1010** disposed at the distal end **1006.** A collar portion **1012** is disposed between the first **1008** and second **1010** barbed portions, and an internal cavity **1014** having an interior surface **1016** passes through the length of the adaptor body **1002.** These basic elements and their variations and equivalents are generally known in the art.

The improved adaptor body **1002,** however, further includes a coupling portion **1018** disposed at the distal end **1006** of the adaptor body **1002.** In preferred embodiments, the coupling portion **1018** is provided as an internal thread disposed on the interior surface of the internal cavity **1014,** extending longitudinally thereon from the distal end **1006** of the adaptor body **1002.** The coupling portion **1018** is adapted for complimentary threaded retention of an external thread of an extension, for instance a fitting extension **902** as shown in **Fig. 17** and described in more detail in connection with **Figs. 13a-13c****.** In this exemplary embodiment, a length of tubing, for instance, can be attached to the fitting portion of the fitting extension **902** to provide for additional depth for sampling points.

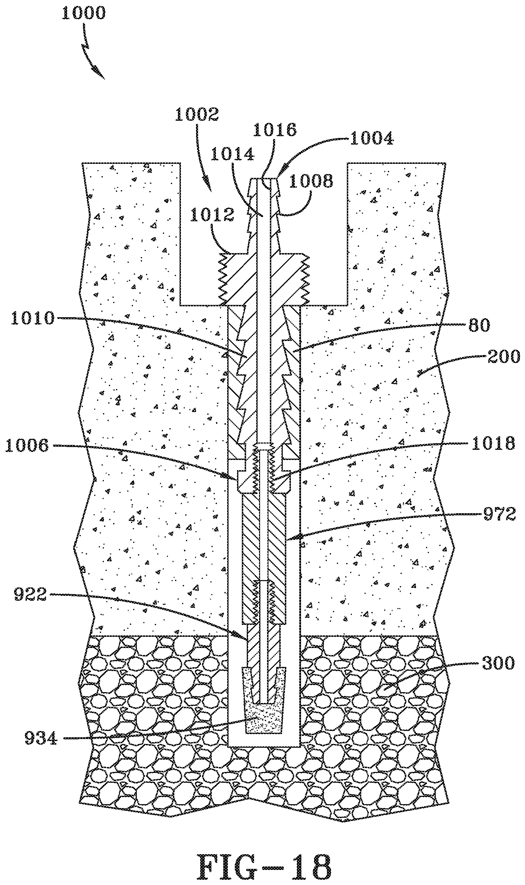

A sectional view of a further exemplary embodiment of the invented sampling system **1000** in use in connection with an exemplary slab **200** is illustrated in **Fig. 18****.** An exemplary improved adaptor body **1002,** example not falling under the scope of the claimed invention, is shown as described in further detail in connection with **Fig. 17** above. In this embodiment, a length extension **972** is threadably attached to and between the coupling portion **1018** of the adaptor body **1002** and a filter extension **922.** This exemplary configuration, for example, permits the user to extend the effective length of the internal cavity **1014** to a sampling point below the slab **200,** and further provides a means for filtering particulates from the vapor stream being sampled via the filter element **934.**

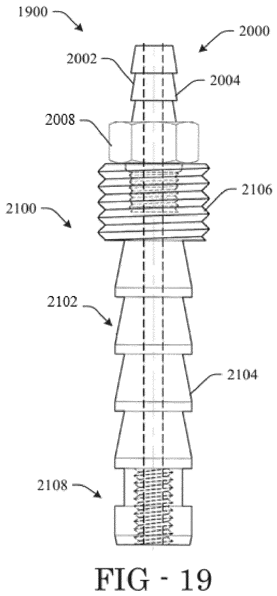

**Figs. 19-21** illustrates another exemplary embodiment of a multi-piece adaptor body **1900** in accordance with an aspect of the innovation. The adaptor body **1900** includes a first body portion **2000** and a second body portion **2100.** The first body portion **2000** is removably attached to the second body portion **2100,** which facilitates flexibility in use of the adaptor body **1900.** More specifically, after installation, the first body portion **2000** can be removed to allow a third party (e.g., Swagelok) adaptor or fitting to be attached to the second body portion **2100.** This allows the user to use different sized tubing (not shown), which connects to the first body portion **2000** or to the third party adaptor and thus, connects the adaptor body **1900** with the soil gas measuring device.

The first body portion **2000** is an integrated piece that includes a first barbed end portion **2002** having at least one barb **2004,** a male connector mechanism **2006,** a grip portion **2008,** and an internal cavity **2010** that axially extends from a first end **2012** to a second end **2014** of the first body portion **2000.** The barb **2004** may have a conical shape that has a diameter d at its widest part such that the first barbed end portion **2002** is sized and adapted to facilitate a connection to tubing of the soil gas measuring device.

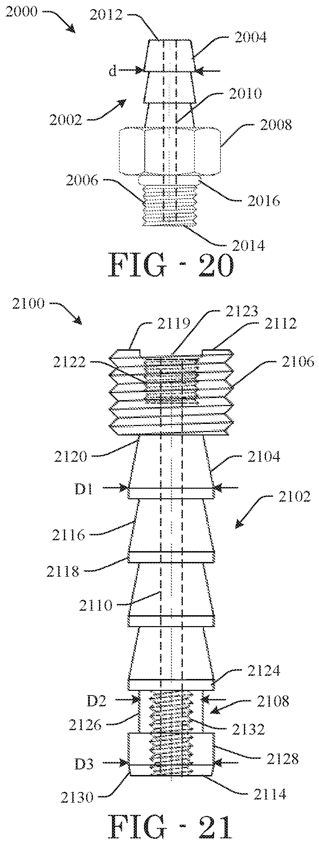

As will be described further below, the male connector mechanism **2006** is adapted to connect the first body portion **2000** to the second body portion **2100.** In the example embodiment described and illustrated in **Fig. 20****,** the male connector mechanism **2006** comprises a male threaded connector **2006** that is adapted to threadedly attach to the second portion **2100.** It is to be understood, however, that the first body portion **2000** and the second body portion **2100** may be connected (and disconnected) by other means, such as but not limited to, a quick disconnect coupling, magnetic coupling, etc. Thus, the male connector mechanism **2006** can comprise any type of connection mechanism associated with any type of coupling, such as but not limited to those mentioned above. An O-ring **2016** may beprovided around the male connector mechanism **2006** to provide a seal between the first body portion **2000** and the second body portion **2100** during the sampling process.

The grip portion **2008** is adapted to allow the user to attach a removal device to the first body portion **2000** to attach and remove the first body portion **2000** from the second body portion **2100.** In the example embodiment illustrated in the figures, the grip portion **2008** has a circular shape with multiple flat surfaces similar to that of a bolt to allow the attachment of a removal device (e.g., socket, wrench, etc.). The grip portion **2008,** however, can be any suitable grip that facilitates removal of the first portion that coincides with other types of connection means, as disclosed above.

The second body portion **2100** is an integrated piece that includes a second barbed end portion **2102** having at least one barb **2104,** a male threaded collar **2106,** a projection portion **2108,** and an internal cavity **2110** that axially extends from a first end **2112** to a second end **2114** of the second portion **2100.** When the first body portion **2000** and the second body portion **2100** are connected, the internal cavity **2010** of the first body portion **2000** and the internal cavity **2110** of the second portion are aligned such that the internal cavity extends the length of the adaptor body **1900** to allow the gas sample to pass through the adaptor body **1900.**

The barb **2104** may have a conically shaped part **2116** that has a diameter **D1** at its widest part and a cylindrically shaped part **2118** that extends from the widest part of the conically shaped part **2116.** This configuration facilitates insertion of the second barbed end portion **2102** into the tube **80** described above (see **Fig. 3a**). Further, the presence of the cylindrically shaped part **2118** increases the surface area of the barb **2104** that contacts an inner surface of the tube **80.** The increased surface area of the barb **2104** in contact with the inner surface of the tube enhances the stability of the adaptor body **1900** after it is installed.

The male threaded collar **2106** may include a first surface **2119** and is disposed at a first end **2120** of the second barbed end portion **2102** and is used to install and extract the adaptor body **1900** as described herein. The male threaded collar **2106** includes a first female receiving connector **2122** defined therein. The first female receiving connector **2122** receives the male connector mechanism **2006** to thereby connect the first body portion **2000** to the second body portion **2100** for installation and/or gas sampling. In the example embodiment described and illustrated in **Fig. 21****,** the first female receiving connector **2122** comprises a first female threaded connector **2122** that is adapted to threadedly receive the male threaded connector **2006.** As mentioned above, it is to be understood, however, that the first body portion **2000** and the second body portion **2100** may be connected by other means, such as but not limited to, a quick disconnect coupling, magnetic coupling, etc. Thus, the first female receiving connector/mechanism **2122** can comprise any type of receiving connector/mechanism associated with any type of coupling, such as but not limited to those mentioned above. The male threaded collar **2106** is also used to install and extract the adaptor body **1900,** as described above. A recess **2123** may be defined in the male threaded collar **2106** at an entrance to the first female receiving connector **2122.** The recess **2123** receives the O-ring **2016** to prevent gas leakage between the first body portion **2000** and the second body portion **2100** during the sampling process.

The projection portion **2108** is disposed at a second end **2124** of the second barbed end portion **2102** and may include a first cylindrically projection **2126** having a diameter **D2** that is less than **D1** and a second cylindrically shaped projection **2128** having a diameter **D3** that is substantially the same as **D1.** The second cylindrically shaped projection **2128** may include a beveled edge **2130** that facilitates installation of the adaptor body **1900,** as described herein. A second female receiving (threaded) connector/mechanism **2132** may be defined in the projection portion **2108** that facilitates the addition of extensions, as described above and illustrated in **Figs. 13-18****.**

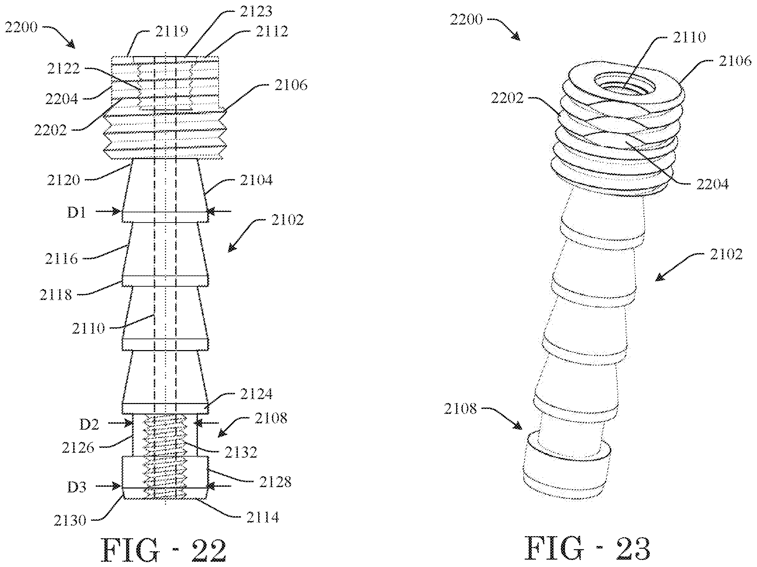

**Figs. 22 and 23** illustrate a perspective and plan view respectively of another embodiment of an adaptor body **2200** in accordance with an aspect of the innovation. The adaptor body **2200** is similar to the adaptor body **1900** illustrated in **Figs. 19-21****,** thus, similar features between the two example embodiments will not be repeated in the description of the example embodiment illustrated in **Figs. 22 and 23****.**

The example adaptor body **2200** further includes a means for the user of the adaptor body **2200** to grip the male threaded collar **2106** of the second body portion **2100** to prevent rotation of the second body portion **2100** during removal or attachment of the first body portion **2000** or the third party adaptor from the second body portion **2100.** Specifically, at least one thread **2202** of the male threaded collar **2106** include a flat surface **2204** disposed on opposite sides of the male threaded collar **2106.** This configuration allows the user to engage the oppositely disposed flat surfaces on the male threaded collar **2106** and grip the male threaded collar **2106** with a tool (e.g., wrench) to prevent the second body portion **2100** from rotating as mentioned above. It is to be understood that the innovation is not dependent on the number of threads **2202** having oppositely disposed flat surfaces **2204.** The number of threads **2202** having flat surfaces **2204** may range from one thread **2202** to all threads. Further, the innovation is not dependent on the number of oppositely disposed flat surfaces **2204.**

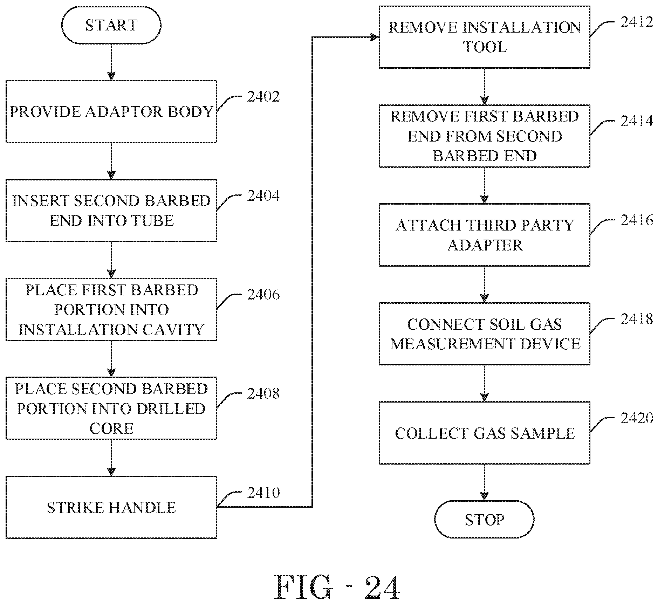

Referring to **Fig. 24****,** a method of collecting gas samples is described. At **2402,** an adaptor body is provided having a first barbed end and a second barbed end. At **2404,** inserting at least a portion of the second barbed end into a tubular body. At **2406,** placing at least a portion of the first barbed end into the installation cavity in the handle of the installation tool. At **2408,** placing the second barbed end into a drilled core. At **2410,** striking the handle on an opposite end of the installation cavity to force the adaptor body into the drilled core. At **2412,** removing the installation handle from the first barbed end. At **2414,** removing the first barbed end of the adaptor body from the second barbed end. At **2416,** attaching a third party adaptor of fitting to the second barbed end. At **2418,** connecting a soil gas measurement device to the third party adaptor. At **2420,** collecting the gas sample.

These and other configurations of the exemplary system components will be evident to those skilled in the art after reading the disclosure provided herein. The invented system may thus be used to sample sub-slab soil gas with increased efficiency and extensibility, and further reduces the intrusion of such sampling activities into the day-to-day operations being conducted in any given sampling site.

The exemplary embodiments were chosen and described in order to explain some of the principles of the present invention so that others skilled in the art may practice the invention. While certain embodiments of the present invention are described in detail above, the scope of the invention is not to be considered limited by such disclosure, and modifications are possible without departing from the scope of the appended claims.

## Claims

1. An adaptor body (1900) for a sub-slab soil gas collecting device comprising:
a first body portion (2000) having a first barbed end portion (2002), a male connection mechanism (2006), and a grip portion (2008);
a second body portion (2100) having a second barbed end portion (2102), and a male threaded collar (2106) including a first female receiving mechanism (2122) that receives the male connection mechanism (2006);
wherein the male threaded collar (2106) is disposed at a first end portion (2120) of the second barbed end portion (2102) for facilitating the installation and removal of the adaptor body (1900) in a slab, the male threaded collar (2106) including at least one thread (2202) having flat surfaces (2204) disposed on radially opposite sides of the male threaded collar (2106) for facilitating prevention of rotation of the second body portion (2100) after installation;
wherein the grip portion (2008) facilitates the attachment and removal of the first body portion (2000) from the second body portion (2100); and
an internal cavity (2010,2110) axially extending the length of both the first body portion (2000) and the second body portion (2100) that allows soil gas to flow through the first body portion (2000) and the second body portion (2100).

2. The adaptor body (1900) of claim 1, wherein the male connection mechanism (2006) is a male threaded connector and the female receiving mechanism (2122) is a female threaded receiving portion defined in the male threaded collar (2106) that receives the male threaded portion.

3. The adaptor body (1900) of claim 1 further comprising a projection portion (2108) disposed at a second end (2124) of the second barbed end portion (2102) and including a second female receiving mechanism (2132) that receives an extension (902,922,952,972).

4. The adaptor body (1900) of claim 3, wherein the projection portion (2108) includes a first cylindrically shaped projection (2126) and a second cylindrically shaped projection (2128) having a diameter that is larger than a diameter of the first cylindrical projection (2126), and wherein the second cylindrically shaped projection (2128) includes a beveled edge (2130) that facilitates installation.

5. The adaptor body (1900) of claim 1, wherein the first barbed end portion (2002) includes at least one barb (2004) and the second barbed end portion (2102) includes at least one barb (2104) having a diameter that is larger than a diameter of the at least one barb (2004) of the first barbed end portion (2002).

6. The adaptor body (1900) of claim 1, wherein the second barbed end portion (2102) includes at least one barb (2104) having a conically shaped portion (2116) and cylindrically shaped portion (2118) extending from a widest part of the conically shaped portion (2116).

7. The adaptor body (1900) of claim 6, wherein the cylindrically shaped portion (2118) includes an outer surface that increases the surface area of the at least one barb (2104) that contacts a tubular body (80) to enhance a stability of the adaptor body (1900) when installed.

8. A system (1000) for facilitating the analysis of samples of a sub-slab soil gas comprising:
an adaptor body (1900) according to any of claims 1 to 7;
a tubular body (80) having an interior cavity (82) adapted to receive the second barbed end portion (2102) of the adaptor body (1900); and
a tool (600) that facilitates installation and removal of the adaptor body (1900) in the slab.

9. The system of claim 8, wherein the tool (600) comprises:
a stem (610) having a pre-determined length of male threads (640) disposed on a first end (620);
a handle (615) that intersects with a second end (625) of the stem (610);
an installation cavity (635) defined in an at least one end of the handle (615) and adapted to receive the first barbed end portion (2002); and
an extraction cavity (630) disposed within the first end (620) of the stem (610) and adapted to receive the first barbed end portion (2002).

10. The system of claim 9, wherein the adaptor body (1900) includes a male threaded collar (2106) disposed at a first end portion (2120) of the second barbed end portion (2102) that includes a first surface (2119) that the tool (600) contacts during installation.

11. The system of claim 10 further comprising a threaded coupling (700) having internal threads that threads onto the pre-determined length of male threads (640) on the first end (620) of the stem (610) and on the male threaded collar (2106).

12. The system of claim 8, wherein the second barbed end portion (2102) includes at least one barb (2104) having a conically shaped portion (2116) and cylindrically shaped portion (2118) extending from a widest part of the conically shaped portion (2116).

13. The system of claim 12, wherein the cylindrically shaped portion (2118) includes an outer surface that increases the surface area of the at least one barb (2104) that contacts a tubular body (80) to enhance a stability of the adaptor body (1900) when installed.

14. A method of collecting sub-slab soil gas samples comprising:
providing an adaptor body (1900) according to any of claims 1 to 7;
inserting at least a portion of the second barbed end portion (2102) into a tubular body (80);
placing at least a portion of the first barbed end portion (2002) into an installation cavity (635) of a handle (615) of an installation tool (600);
placing the second barbed end portion (2102) into a drilled core;
striking the handle (615) on an opposite end of the installation cavity (635) to force the adaptor body (1900) into the drilled core;
removing the installation handle (615) from the first barbed end portion (2002);
removing the first barbed end portion (2002) of the adaptor body (1900) from the second barbed end portion (2102);
engaging oppositely disposed flat surfaces (2204) on at least one thread (2202) of a male threaded collar (2106) disposed at a first end portion (2120) of the second barbed end portion (2102); and
attaching a third party adaptor to the second barbed end portion (2102).

15. The method of claim 14 further comprising connecting a soil gas measurement device to the third party adaptor and collecting the gas sample.

16. The method of claim 14, wherein the second barbed end portion (2102) includes at least one barb (2104) having a conically shaped portion (2116) and cylindrically shaped portion (2118) extending from a widest part of the conically shaped portion (2116).

17. The method of claim 16, wherein the cylindrically shaped portion (2118) includes an outer surface that increases the surface area of the at least one barb (2104) that contacts an inner surface of the tubular body (80) to enhance a stability of the adaptor body (1900) when installed.

18. The method of claim 14, wherein the adaptor body (1900) includes a male threaded collar (2106) disposed at a first end portion (2120) of the second barbed end portion (2102) that includes a first surface (2119) that the tool (600) contacts during installation.

19. The method of claim 18, wherein the first barbed end portion (2002) includes a male connection mechanism (2006) and the second barbed end portion (2102) includes a first female receiving mechanism (2122) defined in the male threaded collar (2106) that removably receives the male connection mechanism (2006).

## Patentansprüche

1. Adapterkörper (1900) für eine Bodenplattenunterbereich-Bodenluftsammelvorrichtung, umfassend:
einen ersten Körperabschnitt (2000) mit einem ersten Widerhakenendabschnitt (2002), einem Steckverbindungsmechanismus (2006) und einem Griffabschnitt (2008);
einen zweiten Körperabschnitt (2100) mit einem zweiten Widerhakenendabschnitt (2102) und einem Außengewindekragen (2106), der einen ersten Buchsenaufnahmemechanismus (2122) einschließt, der den Steckverbindungsmechanismus (2006) aufnimmt;
wobei der Außengewindekragen (2106) an einem ersten Endabschnitt (2120) des zweiten Widerhakenendabschnitts (2102) angeordnet ist, um das Einbauen und Entfernen des Adapterkörpers (1900) in einer Platte zu erleichtern, wobei der Außengewindekragen (2106) mindestens ein Gewinde (2202) mit flachen Oberflächen (2204) einschließt, die auf radial gegenüberliegenden Seiten des Außengewindekragens (2106) angeordnet sind, um die Verhinderung einer Drehung des zweiten Körperabschnitts (2100) nach dem Einbau zu erleichtern;
wobei der Griffabschnitt (2008) das Anbringen und Entfernen des ersten Körperabschnitts (2000) von dem zweiten Körperabschnitt (2100) erleichtert; und
einen inneren Hohlraum (2010, 2110), der sich durch die Länge sowohl des ersten Körperabschnitts (2000) als auch des zweiten Körperabschnitts (2100) axial erstreckt, wodurch Bodenluft durch den ersten Körperabschnitt (2000) und den zweiten Körperabschnitt (2100) strömen kann.

2. Adapterkörper (1900) nach Anspruch 1, wobei der Steckverbindungsmechanismus (2006) ein Außengewindeanschluss ist und der Buchsenaufnahmemechanismus (2122) ein Innengewindeaufnahmeabschnitt ist, der in dem Außengewindekragen (2106) definiert ist, der den Außengewindeabschnitt aufnimmt.

3. Adapterkörper (1900) nach Anspruch 1, ferner umfassend einen Vorsprungsabschnitt (2108), der an einem zweiten Ende (2124) des zweiten Widerhakenendabschnitts (2102) angeordnet ist und einen zweiten Buchsenaufnahmemechanismus (2132) einschließt, der eine Verlängerung (902, 922, 952, 972) aufnimmt.

4. Adapterkörper (1900) nach Anspruch 3, wobei der Vorsprungsabschnitt (2108) einen ersten zylindrisch geformten Vorsprung (2126) und einen zweiten zylindrisch geformten Vorsprung (2128) mit einem Durchmesser einschließt, der größer ist als ein Durchmesser des ersten zylindrischen Vorsprungs (2126), und wobei der zweite zylindrisch geformte Vorsprung (2128) eine abgeschrägte Kante (2130) einschließt, die den Einbau erleichtert.

5. Adapterkörper (1900) nach Anspruch 1, wobei der erste Widerhakenendabschnitt (2002) mindestens einen Widerhaken (2004) und der zweite Widerhakenendabschnitt (2102) mindestens einen Widerhaken (2104) mit einem Durchmesser einschließt, der größer ist als ein Durchmesser des mindestens einen Widerhakens (2004) des ersten Widerhakenendabschnitts (2002).

6. Adapterkörper (1900) nach Anspruch 1, wobei der zweite Widerhakenendabschnitt (2102) mindestens einen Widerhaken (2104) mit einem konisch geformten Abschnitt (2116) und einem zylindrisch geformten Abschnitt (2118) einschließt, der sich von einem breitesten Teil des konisch geformten Abschnitts (2116) erstreckt.

7. Adapterkörper (1900) nach Anspruch 6, wobei der zylindrisch geformte Abschnitt (2118) eine Außenoberfläche einschließt, die den Oberflächenbereich des mindestens einen Widerhakens (2104) vergrößert, der einen Rohrkörper (80) kontaktiert, um die Stabilität des Adapterkörpers (1900) im eingebauten Zustand zu verbessern.

8. System (1000) zur Erleichterung der Analyse von Proben von Bodenplattenunterbereich-Bodenluft, umfassend:
einen Adapterkörper (1900) nach einem der Ansprüche 1 bis 7;
einen Rohrkörper (80) mit einem inneren Hohlraum (82), der dazu ausgelegt ist, den zweiten Widerhakenendabschnitt (2102) des Adapterkörpers (1900) aufzunehmen; und
ein Werkzeug (600), das das Einbauen und Entfernen des Adapterkörpers (1900) in der Bodenplatte erleichtert.

9. System nach Anspruch 8, wobei das Werkzeug (600) umfasst:
einen Schaft (610) mit einer vorbestimmten Länge von Außengewinden (640), die an einem ersten Ende (620) angeordnet sind;
einen Griff (615), der sich mit einem zweiten Ende (625) des Schafts (610) schneidet;
einen Einbauhohlraum (635), der in mindestens einem Ende des Griffs (615) definiert und zur Aufnahme des ersten Widerhakenendabschnitts (2002) ausgelegt ist; und
einen Extraktionshohlraum (630), der innerhalb des ersten Endes (620) des Schafts (610) angeordnet und zur Aufnahme des ersten Widerhakenendabschnitts (2002) ausgelegt ist.

10. System nach Anspruch 9, wobei der Adapterkörper (1900) einen Außengewindekragen (2106) einschließt, der an einem ersten Endabschnitt (2120) des zweiten Widerhakenendabschnitts (2102) angeordnet ist, der eine erste Oberfläche (2119) einschließt, die das Werkzeug (600) während des Einbaus kontaktiert.

11. System nach Anspruch 10, ferner umfassend eine Gewindekopplung (700) mit Innengewinden, die auf die vorbestimmte Länge der Außengewinde (640) am ersten Ende (620) des Schafts (610) und am Außengewindekragen (2106) aufgeschraubt werden.

12. System nach Anspruch 8, wobei der zweite Widerhakenendabschnitt (2102) mindestens einen Widerhaken (2104) mit einem konisch geformten Abschnitt (2116) und einem zylindrisch geformten Abschnitt (2118) einschließt, der sich von einem breitesten Teil des konisch geformten Abschnitts (2116) erstreckt.

13. System nach Anspruch 12, wobei der zylindrisch geformte Abschnitt (2118) eine Außenoberfläche einschließt, die den Oberflächenbereich des mindestens einen Widerhakens (2104) vergrößert, der einen Rohrkörper (80) kontaktiert, um die Stabilität des Adapterkörpers (1900) im eingebauten Zustand zu verbessern.

14. Verfahren zum Sammeln von Bodenplattenunterbereich-Bodenluftproben, umfassend:
Bereitstellen eines Adapterkörpers (1900) nach einem der Ansprüche 1 bis 7;
Einführen mindestens eines Abschnitts des zweiten Widerhakenendabschnitts (2102) in einen Rohrkörper (80);
Platzieren mindestens eines Abschnitts des ersten Widerhakenendabschnitts (2002) in einem Einbauhohlraum (635) eines Griffs (615) eines Einbauwerkzeugs (600);
Platzieren des zweiten Widerhakenendabschnitts (2102) in einem gebohrten Kern;
Hämmern auf den Griff (615) an einem gegenüberliegenden Ende des Einbauhohlraums (635), um den Adapterkörper (1900) in den gebohrten Kern zu zwingen;
Entfernen des Einbaugriffs (615) von dem ersten Widerhakenendabschnitt (2002);
Entfernen des ersten Widerhakenendabschnitts (2002) des Adapterkörpers (1900) von dem zweiten Widerhakenendabschnitt (2102);
Eingreifen in entgegengesetzt angeordnete flache Oberflächen (2204) an mindestens einem Gewinde (2202) eines Außengewindekragens (2106), der an einem ersten Endabschnitt (2120) des zweiten Widerhakenendabschnitts (2102) angeordnet ist; und
Anbringen eines Adapters eines Drittanbieters an dem zweiten Widerhakenendabschnitt (2102).

15. Verfahren nach Anspruch 14, ferner umfassend das Verbinden einer Bodenluftmessvorrichtung mit dem Adapter eines Drittanbieters und das Sammeln der Luftprobe.

16. Verfahren nach Anspruch 14, wobei der zweite Widerhakenendabschnitt (2102) mindestens einen Widerhaken (2104) mit einem konisch geformten Abschnitt (2116) und einem zylindrisch geformten Abschnitt (2118) einschließt, der sich von einem breitesten Teil des konisch geformten Abschnitts (2116) erstreckt.

17. Verfahren nach Anspruch 16, wobei der zylindrisch geformte Abschnitt (2118) eine Außenoberfläche einschließt, die den Oberflächenbereich des mindestens einen Widerhakens (2104) vergrößert, der eine Innenoberfläche des Rohrkörpers (80) berührt, um die Stabilität des Adapterkörpers (1900) im eingebauten Zustand zu verbessern.

18. Verfahren nach Anspruch 14, wobei der Adapterkörper (1900) einen Außengewindekragen (2106) einschließt, der an einem ersten Endabschnitt (2120) des zweiten Widerhakenendabschnitts (2102) angeordnet ist, der eine erste Oberfläche (2119) einschließt, die das Werkzeug (600) während des Einbaus berührt.

19. Verfahren nach Anspruch 18, wobei der erste Widerhakenendabschnitt (2002) einen Steckverbindungsmechanismus (2006) einschließt und der zweite Widerhakenendabschnitt (2102) einen ersten Buchsenaufnahmemechanismus (2122) einschließt, der in dem Außengewindekragen (2106) definiert ist, der den Steckverbindungsmechanismus (2006) entfernbar aufnimmt.

## Revendications

1. Corps d'adaptateur (1900) pour un dispositif de collecte de gaz de sol sous-dalle comprenant :
une première partie de corps (2000) ayant une première partie d'extrémité cannelée (2002), un mécanisme de connexion mâle (2006) et une partie de prise (2008) ;
une seconde partie de corps (2100) ayant une seconde partie d'extrémité cannelée (2102), et un collier fileté mâle (2106) comprenant un premier mécanisme de réception femelle (2122) qui reçoit le mécanisme de connexion mâle (2006) ;
dans lequel le collier fileté mâle (2106) est disposé au niveau d'une première partie d'extrémité (2120) de la seconde partie d'extrémité cannelée (2102) pour faciliter l'installation et le retrait du corps d'adaptateur (1900) dans une dalle, le collier fileté mâle (2106) comprenant au moins un filetage (2202) ayant des surfaces plates (2204) disposées sur des côtés radialement opposés du collier fileté mâle (2106) pour faciliter la prévention de la rotation de la deuxième partie de corps (2100) après l'installation ;
dans lequel la partie de prise (2008) facilite la fixation et le retrait de la première partie de corps (2000) de la seconde partie de corps (2100) ; et
une cavité interne (2010, 2110) s'étendant axialement sur la longueur à la fois de la première partie de corps (2000) et de la seconde partie de corps(2100), qui permet au gaz du sol de s'écouler à travers la première partie de corps (2000) et la seconde partie de corps (2100).

2. Corps d'adaptateur (1900) selon la revendication 1, dans lequel le mécanisme de connexion mâle (2006) est un connecteur fileté mâle et le mécanisme de réception femelle (2122) est une partie de réception filetée femelle définie dans le collier fileté mâle (2106) qui reçoit la partie filetée mâle.

3. Corps d'adaptateur (1900) selon la revendication 1, comprenant en outre une partie en saillie (2108) disposée à une seconde extrémité (2124) de la seconde partie d'extrémité cannelée (2102) et comprenant un second mécanisme de réception femelle (2132) qui reçoit une extension (902, 922, 952, 972).

4. Corps d'adaptateur (1900) selon la revendication 3, dans lequel la partie en saillie (2108) comprend une première saillie de forme cylindrique (2126) et une seconde saillie de forme cylindrique (2128) ayant un diamètre qui est plus grand qu'un diamètre de la première saillie cylindrique (2126), et dans lequel la seconde saillie de forme cylindrique (2128) comprend un bord biseauté (2130) qui facilite l'installation.

5. Corps d'adaptateur (1900) selon la revendication 1, dans lequel la première partie d'extrémité cannelée (2002) comprend au moins une cannelure (2004) et la seconde partie d'extrémité cannelée (2102) comprend au moins une cannelure (2104) ayant un diamètre qui est plus grand. qu'un diamètre de l'au moins une cannelure (2004) de la première partie d'extrémité cannelée (2002).

6. Corps d'adaptateur (1900) selon la revendication 1, dans lequel la seconde partie d'extrémité cannelée (2102) comprend au moins une cannelure(2104) ayant une partie de forme conique (2116) et une partie de forme cylindrique (2118) s'étendant depuis une partie la plus large de la partie de forme conique (2116).

7. Corps d'adaptateur (1900) selon la revendication 6, dans lequel la partie de forme cylindrique (2118) comprend une surface extérieure qui augmente la surface de l'au moins une cannelure (2104) qui entre en contact avec un corps tubulaire (80) pour améliorer la stabilité du corps de l'adaptateur (1900) une fois installé.

8. Système (1000) pour faciliter l'analyse d'échantillons d'un gaz de sol sous-dalle comprenant :
un corps d'adaptateur (1900) selon l'une quelconque des revendications 1 à 7 ;
un corps tubulaire (80) ayant une cavité intérieure (82) adaptée pour recevoir la seconde partie d'extrémité cannelée (2102) du corps d'adaptateur (1900) ; et
un outil (600) qui facilite l'installation et le retrait du corps d'adaptateur (1900) dans la dalle.

9. Système selon la revendication 8, dans lequel l'outil (600) comprend :
une tige (610) ayant une longueur prédéterminée de filets mâles (640) disposés sur une première extrémité (620) ;
une poignée (615) qui coupe une seconde extrémité (625) de la tige (610) ;
une cavité d'installation (635) définie dans une au moins une extrémité de la poignée (615) et adaptée pour recevoir la première partie d'extrémité cannelée (2002) ; et
une cavité d'extraction (630) disposée à l'intérieur de la première extrémité (620) de la tige (610) et adaptée pour recevoir la première partie d'extrémité cannelée (2002).

10. Système selon la revendication 9, dans lequel le corps d'adaptateur (1900) comprend un collier fileté mâle (2106) disposé au niveau d'une première partie d'extrémité (2120) de la seconde partie d'extrémité cannelée (2102), qui comprend une première surface (2119) avec laquelle l'outil (600) entre en contact lors de l'installation.

11. Système selon la revendication 10, comprenant en outre un accouplement fileté (700) ayant des filets internes, qui se visse sur la longueur prédéterminée des filets mâles (640) sur la première extrémité (620) de la tige (610) et sur le collier fileté mâle (2106).

12. Système selon la revendication 8, dans lequel la seconde partie d'extrémité cannelée (2102) comprend au moins une cannelure(2104) ayant une partie de forme conique (2116) et une partie de forme cylindrique (2118) s'étendant depuis une partie la plus large de la partie de forme conique (2116).

13. Système selon la revendication 12, dans lequel la partie de forme cylindrique (2118) comprend une surface extérieure qui augmente la surface de l'au moins une cannelure (2104) qui entre en contact avec un corps tubulaire (80) pour améliorer la stabilité du corps de l'adaptateur (1900) une fois installé.

14. Procédé de collecte d'échantillons de gaz de sol de sous-dalle comprenant :
la fourniture d'un corps d'adaptateur (1900) selon l'une quelconque des revendications 1 à 7 ;
l'insertion d'au moins une partie de la seconde partie d'extrémité cannelée (2102) dans un corps tubulaire (80) ;
le placement d'au moins une partie de la première partie d'extrémité cannelée (2002) dans une cavité d'installation (635) d'une poignée (615) d'un outil d'installation (600) ;
le placement de la seconde partie d'extrémité cannelée (2102) dans un noyau foré ;
la frappe de la poignée (615) sur une extrémité opposée de la cavité d'installation (635) pour forcer le corps d'adaptateur (1900) dans le noyau foré ;
le retrait de la poignée d'installation (615) de la première partie d'extrémité cannelée (2002) ;
le retrait de la première partie d'extrémité cannelée (2002) du corps d'adaptateur (1900) de la seconde partie d'extrémité cannelée (2102) ;
l'engagement des surfaces plates disposées de manière opposée (2204) sur au moins un filetage (2202) d'un collier fileté mâle (2106) disposé au niveau d'une première partie d'extrémité (2120) de la seconde partie d'extrémité cannelée (2102) ; et
la fixation d'un adaptateur tiers à la seconde partie d'extrémité cannelée (2102).

15. Procédé selon la revendication 14, comprenant en outre la connexion d'un dispositif de mesure de gaz du sol à l'adaptateur tiers et la collecte de l'échantillon de gaz.

16. Procédé selon la revendication 14, dans lequel la seconde partie d'extrémité cannelée (2102) comprend au moins une cannelure(2104) ayant une partie de forme conique (2116) et une partie de forme cylindrique (2118) s'étendant depuis une partie la plus large de la partie de forme conique (2116).

17. Procédé selon la revendication 16, dans lequel la partie de forme cylindrique (2118) comprend une surface extérieure qui augmente la surface de l'au moins une cannelure (2104) qui entre en contact avec la surface intérieure du corps tubulaire (80) pour améliorer la stabilité du corps d'adaptateur (1900) une fois installé.

18. Procédé selon la revendication 14, dans lequel le corps d'adaptateur (1900) comprend un collier fileté mâle (2106) disposé au niveau d'une première partie d'extrémité (2120) de la seconde partie d'extrémité cannelée (2102), qui comprend une première surface (2119) avec laquelle l'outil (600) entre en contact lors de l'installation.

19. Procédé selon la revendication 18, dans lequel la première partie d'extrémité cannelée (2002) comprend un mécanisme de connexion mâle (2006) et la seconde partie d'extrémité cannelée (2102) comprend un premier mécanisme de réception femelle (2122) défini dans le collier fileté mâle (2106), qui reçoit de manière amovible le mécanisme de connexion mâle (2006).
